# EUROPÄISCHE PATENTANMELDUNG

(11) **EP 3 407 286 A1**
(43) Veröffentlichungstag der Anmeldung: **28.11.2018**
(21) Anmeldenummer: 18171766.1
(22) Anmeldetag: 11.05.2018
(51) Int. Cl.: G06Q 30/02, G06Q 50/16

(54) **VERFAHREN UND SYSTEM ZUR INTERAKTIVEN SCHÄTZUNG VON BAUKOSTEN ODER IMMOBILIENWERTEN**

(30) Priorität: 24.05.2017 CH 6862017
(71) Anmelder: kennwerte AG, 5200 Brugg AG (CH)
(72) Erfinder: Badertscher, Mischa, 5200 Brugg (CH); Baumgartner, Alfred, 5200 Brugg (CH)
(74) Vertreter: Herrmann, Johanna

(57) **Zusammenfassung**

Ein Verfahren (10) zur interaktiven Schätzung von Baukosten oder Immobilienwerten für ein Gebäude enthält einen Schritt der Eingabe einer Eingabegrösse des Gebäudes in ein System, wobei die Eingabe der Eingabegrösse eine Dateneingabe (2) umfasst. Die Dateneingabe entspricht einer gewählten Gebäudekonfiguration, wobei gewählte Gebäudekonfiguration auf einem Benutzergerät angezeigt wird. Das System enthält einen Regler, wobei durch Betätigung des Reglers eine Veränderung der gewählten Gebäudekonfiguration auf dem Benutzergerät erfolgt, sodass eine Datenanpassung (3) erfolgt, wobei die Betätigung des Reglers fortgesetzt wird, bis die gewählte Gebäudekonfiguration einer gewünschten Gebäudekonfiguration entspricht, wobei für die gewünschte Gebäudekonfiguration eine Analyse (4) durchgeführt wird, um die Baukosten oder Immobilienwerte für die gewünschte Gebäudekonfiguration zu schätzen.

## Beschreibung

Gegenstand der Erfindung ist ein Verfahren und ein System zur interaktiven Schätzung von Baukosten oder Immobilienwerten, insbesondere Baukosten, wobei die Baukosten auch Baukostenkennzahlen, Baukostenkennwerte, Baupreise, Baupreiskennzahlen, Baupreiskennwerte umfassen, Bau- oder Planungsterminen sowie Versicherungs- oder Substanzwerten von Gebäuden. Basierend auf einer Eingabegrösse werden für ein Bauprojekt oder ein bestehendes Gebäude beispielsweise die Baukosten oder Immobilienwerte unter Verwendung von historischen Baukostendaten, Bau- oder Planungsterminen sowie Versicherungs- oder Substanzwerte von Gebäuden ermittelt. Ein derartiges Verfahren wird von einem System zur Schätzung von Baukosten oder Immobilienwerten bereitgestellt. Ein Computerprogrammprodukt dient der Ermittlung der Baukosten oder Immobilienwerte in Abhängigkeit von benutzerdefinierten Parametern.

Eine Vielzahl Lösungen ist für die Schätzung von Verkaufspreisen für Gebäude oder Inneneinrichtungen von Räumen auf dem Markt erhältlich. Ein Beispiel für ein Verfahren zur Ermittlung eines Gebäudepreises ist in US2007/0189506 A1 offenbart, welches auf der Verwendung von Entscheidungsbaumstrukturen beruht. Ein Bewertungssystem für Immobilien basierend auf Verkaufspreisen ist in WO0211038 A1 beschrieben. Diese Anwendung kann bei Parametern, die nicht mit standortabhängigen Preisen korreliert sind, zu teilweise beträchtlichen Abweichungen von den tatsächlichen Kosten führen, da sämtliche Kosten in Abhängigkeit von Preisen, beispielsweise standortabhängigen Gebäudepreisen, ermittelt werden. Dies kann zur Folge haben, dass durch den Einfluss eines möglicherweise nicht mehr aktuellen standortabhängigen Gebäudepreises eine Kostenschätzung erstellt wird, die mit den tatsächlichen Kosten nicht übereinstimmt.

Es sind auch Budgetplanungsprogramme bekannt, welche dazu dienen, die zukünftigen Kosten einer Liegenschaft oder mehrerer Liegenschaften aufzuzeichnen. Beispielsweise wird dem Benutzer einer Software, wie sie im Dokument US 2013218628 A1 gezeigt ist, eine Eingabemaske präsentiert, welche der Dateneingabe dient. Dieses Budgetplanungsprogramm soll dem Benutzer eine Hilfestellung bei der Priorisierung von Sanierungsarbeiten dienen, indem es die notwendigen Sanierungsarbeiten nach deren Dringlichkeit unter Angabe der finanziellen Aufwendungen auflistet.

US 2003/0115163A1 zeigt ein Verfahren zur Abschätzung der Wiedererstellungskosten eines Gebäudes welches beispielsweise durch einen Schadensfall, beispielsweise Brand, Hochwasser oder Unwetter unbrauchbar geworden ist, oder aus anderen Gründen nicht mehr genutzt werden kann, beispielsweise, weil das Gebäude oder Teile davon nicht mehr den aktuellen Vorschriften entsprechen oder Materialien enthalten, die nach heutigen Vorschriften, beispielsweise aus Gründen der möglichen Beeinträchtigung der Gesundheit, nicht mehr verwendet werden dürfen. Mit dem beschriebenen Verfahren werden Wiedererstellungskosten aus ortsbezogenen Preisdaten für die Preise zur Wiedererstellung des Gebäudes ermittelt. Als Datenbasis werden die Objekt-Verkaufspreise für die Wiedererstellung eines Gebäudes verwendet. Diese Objekt-Verkaufspreise sind marktorientiert, und enthalten eine durch den Verkauf ausgelöste Gewinnspanne und entsprechen daher nicht den Erstellungskosten. Aus diesem Grund ist diese Schätzung mit Unsicherheiten behaftet und daher für viele Anwendungen zu ungenau.

US 2009/0259601 A1 greift diese Problematik auf und offenbart ein Verfahren zur Schätzung von Baukosten für eine Betriebsanlage, die für Forschungszwecke, als Labor oder als Produktionsstätte eingerichtet sein kann. Die Baukosten werden in Abhängigkeit des Typs der Betriebsstätte ermittelt. Je nach Einsatzzweck der Betriebsanlage wird eine unterschiedliche Infrastruktur benötigt. Beispielsweise muss das Fundament und die tragenden Strukturen für eine Produktionshalle, in welcher grosse Lasten bewegt werden müssen, andere mechanische Eigenschaften aufweisen als ein Bürogebäude. Die Infrastruktur für ein Laborgebäude enthält beispielsweise neben den üblichen Strom- und Wasseranschlüssen auch entsprechende Anschlüsse für Druckluft, Sauerstoff, Stickstoff und andere Betriebsmittel. Produktionsstätten für chemische, biologische, pharmazeutische Anlagen oder Reinräume müssen wiederum speziellen Anforderungen genügen, welches Niederschlag in den Kosten der zu erstellenden Betriebsstätte findet. Gemäss US2009/259601 A1 beträgt der Kostenanteil für die Erstellung des Rohbaus 12-15% der Projektkosten. Der Kostenanteil für Dienstleistungen betreffend die Bauplanung beträgt ca. 8- 11 %, für Bewilligungsverfahren und dergleichen 12-15 %, für architektonische Dienstleistungen 12-15 %. Der Kostenanteil für die Elektrifizierung liegt bei 9 bis 12 % der Gesamtkosten. Die Kosten für Heizung, Lüftung, Sanitäranlagen betragen 40 bis 50 %, insbesondere wenn die Kosten auch die Installation entsprechender Entsorgungsanlagen umfassen. Die Kostenschätzung wird durch eine Software erstellt, die auf einem Computersystem läuft. Die Software benötigt allerdings eine Vielzahl von Daten, um eine verlässliche Schätzung der Projektkosten für die Errichtung der Betriebsanlage erstellen zu können. In Abhängigkeit vom Projektbudget benötigt die Software daher Angaben über den Zweck der Betriebsanlage sowie über jeden der genannten Kostenfaktoren, was bereits eine umfassende Kenntnis des Projekts sowie der Betriebsanlage erfordert. Daher eignet sich auch diese Lösung nicht für die Ermittlung von Erstellungskosten von Gebäuden, die vornehmlich als Wohnraum oder Büroraum genutzt werden.

US2011/0153524 A1 zeigt, wie die Auslegung eines Gesamtinstallationssystems, umfassend Sanitäranlagen, Heizungen, Belüftungssysteme, elektrische Installationen und dergleichen mittels höherwertiger Serveranlagen beschleunigt werden kann, indem die Rechnerkapazität erhöht wird, sodass die Rechnerzeit für die von der Berechnungssoftware durchgeführten Iterationen von mehreren Stunden auf wenige Minuten reduziert werden kann. Hierzu wird eine Mehrzahl von Arbeitsstationen (Workstations) über eine Mehrzahl von Schaltern (Switches) mit einem SQL Server, einem Fileserver sowie einer Mehrzahl von Prozessoren verbunden, die als virtuelle Arbeitsstationen betrieben werden können. Mittels dieser Client-Server Architektur ist es möglich, die Arbeitsergebnisse einer Mehrzahl von Arbeitsstationen miteinander zu koppeln und ein Berechnungsmodell zu implementieren, welches die auf den einzelnen Arbeitsstationen vorbereiteten Subroutinen kombiniert und hierdurch eine Optimierung der Auslegung des Gesamtinstallationssystems erzielt. Diese Optimierung kann insbesondere eine Optimierung der Gesamtkosten des Gesamtinstallationssystems beinhalten. Allerdings ist man für den Betrieb dieses Client-Server Systems der Einsatz von Spezialisten erforderlich, welche die Subroutinen bedienen und somit die Basisdaten für die Optimierung des Gesamtinstallationssystems bereitstellen. Daher ist dieses System für den Einsatz in einem Planungsbüro geeignet, in welchem die Arbeit der Planungsspezialisten in die Optimierung des Gesamtsystems einfliessen muss, um eine derartige Optimierung zu erzielen. Diese Lösung eignet sich daher nicht für Nutzer, die mit der Planung von technischen Installationssystemen nicht befasst sind und die sich rasch einen Überblick über die Baukosten eines Gebäudes verschaffen müssen.

US20140222608 A1 offenbart ein computergesteuertes Verfahren zur Schätzung von Renovierungskosten für Wohnungen oder Wohnräume. Der Benutzer kann sich anhand von Fotomaterial von Renovierungsprojekten und basierend auf Angaben zu den eigenen Wohnräumen einen Kostenvoranschlag für sein Renovierungsprojekt von einer Software erstellen lassen. Die Software verbindet eine Fotodatenbank mit einer Dateneingabevorrichtung zur Zuordnung von Informationen, beispielsweise Verkaufspreisen für Inneneinrichtungsgegenstände. Die Fotodatenbank kann auf einem Server bereitgestellt werden, sodass der Benutzer die gewünschten Fotos, Produkte oder Ortsangaben als Objekte vom Server herunterladen kann. Über einen Webclient interagiert der Nutzer auf der Bildschirmoberfläche mit den dort angezeigten Objekten, die er nach Wunsch selektiert und dann, basierend auf seiner Auswahl, einen Kostenvoranschlag erhält. Eine derartige Fotodatenbank kann schnell zu einem Kostenvoranschlag führen, wenn der Benutzer einen Vorschlag aus der Fotodatenbank übernehmen will. Wenn der Benutzer sich die Einrichtungsgegenstände aus verschiedenen Fotos zusammenstellt, kann die Anpassung der Bildausschnitte an die gewünschte Raumsituation eine beträchtliche Zeit in Anspruch nehmen. Um innerhalb kurzer Zeit eine Kostenschätzung eines bestehenden Gebäudes mit einer bestehenden Einrichtungssituation zu erhalten, ist dieses Hilfsmittel nicht geeignet. Es erfordert eine Zusammenstellung der bestehenden Einrichtung anhand von Fotoausschnitten. Diese Fotoausschnitte muss sich der Benutzer aus der Fotodatenbank zusammensuchen, da die bestehende Einrichtung im Normalfall von den in der Fotodatenbank gespeicherten Einrichtungsbeispielen abweicht, schon weil Raumgrössen, Raumaufteilungen, Möbelabmessungen, Farben, Materialien usw. nicht übereinstimmen. Daher eignet sich dieses Hilfsmittel nicht, um eine Kostenschätzung für ein Gebäude innerhalb eines vertretbaren Zeitrahmens zu erstellen.

Die meisten am Markt angebotenen Lösungen zeichnen sich durch eine Ermittlung von Objekt-Verkaufspreisen aus. Die Objekt-Verkaufspreise entsprechen nicht den Baukosten, da sie marktorientiert sind und eine durch den Verkauf ausgelöste Gewinnspanne enthalten. Aus diesem Grund entsprechen die Objekt-Verkaufspreise nicht den Erstellungskosten eines Gebäudes. Für Versicherungen, Käufer, Verkäufer, Bauherren, aber auch potenzielle Auftragnehmer für ein neues Bauprojekt, die ein Angebot erstellen möchten, und andere Interessenten sind daher die zu erwartenden Erstellungskosten eine wichtige Entscheidungsgrundlage.

Es sind auch Softwareprodukte bekannt, wie beispielsweise in der WO2010056994 A1 beschrieben, mittels welchen Gebäudezeichnungen erstellt werden können, die in Bezug auf Energieausnützung, Tageslichtnutzung oder Wärmenutzung optimiert werden können. Ein derartiges Softwareprodukt erstellt ein CAD-Modell eines Gebäudes unter der Berücksichtigung mehrerer Randbedingungen, die vom Designer festgelegt werden können. Mit einem derartigen Softwareprodukt kann ein Gebäudedesign erstellt und/oder optimiert werden, indem das Softwareprodukt eines oder mehrere Optimierungsprobleme löst. Ein Softwareprodukt, wie in der WO2010056994 A1 beschrieben, dient daher der Erstellung eines optimalen Gebäudedesigns gemäss den vom Benutzer festgelegten Kriterien. Die Ausgangsgrösse dieses Softwareprodukts ist somit eine Architekturzeichnung, eine Installationszeichnung, eine Materialstückliste und gegebenenfalls aufgrund der Materialstückliste ermittelter Materialkosten, wenn die Materialpreise im Softwareprodukt hinterlegt sind. Daher kann aufgrund dieser hinterlegten Daten eine Berechnung der Materialkosten und gegebenenfalls der Kosten für die Bau- und Installationsarbeiten für die Erstellung eines Angebots erfolgen. Dieses Softwareprodukt enthält keine Möglichkeit, aus Merkmalen eines bestehenden Gebäudes eine Schätzung der Baukosten oder Immobilienwerte vorzunehmen. Weitere Softwareprodukte zur Erstellung von Angeboten aus CAD-Gebäudezeichnungen oder aus Stücklisten sind in der US2008/0195405 A1 oder der US 2002/0026343 A1 beschrieben, welche die Kosten oder Preise aus Datenbanken auslesen, in welchen diese Kosten oder Preise abgelegt sind.

Somit besteht ein Bedarf an einem Verfahren, mittels welchem ein Benutzer unter der Angabe von einer minimalen Zahl von Eingabegrössen die Baukosten oder Immobilienwerte eines bereits bestehenden Gebäudes ermitteln kann ohne hierfür eine CAD-Zeichnung erstellen zu müssen oder sämtliche Rechnungen des interessierenden Objekts, enthaltend Materialkosten sowie die Kosten für die durchgeführten Arbeiten für die Erstellung des Gebäudes, auswerten zu müssen. Insbesondere soll das Verfahren dem Benutzer ermöglichen, eine verlässliche Schätzung der Baukosten oder Immobilienwerte zu erhalten, wenn er auf keine der vorgenannten Informationsquellen zurückgreifen kann.

Eine Aufgabe der Erfindung ist es, ein Verfahren zu entwickeln, mittels welchem ein Interessent die Baukosten oder Immobilienwerte für ein beliebiges Gebäude ermitteln kann, ohne sämtliche Daten des Bauprojekts dieses Objekts verfügbar zu haben. Insbesondere soll der Benutzer des Verfahrens aus beschränkten, öffentlich einfach zugänglichen Informationen, beispielsweise dem Standort des Gebäudes, der Gebäudehöhe, der Gebäudegrundfläche sowie des von aussen sichtbaren Ausbaustandards eine Schätzung der Baukosten oder des Immobilienwerts vornehmen können.

Die Lösung der Aufgaben der Erfindung erfolgt durch die Merkmale des Anspruchs 1. Weitere vorteilhafte Ausführungen sind Gegenstand der Ansprüche 2 bis 12. Ein System zur Durchführung des Verfahrens ist Gegenstand von Anspruch 13. Vorteilhafte Varianten des Systems sind Gegenstand der Ansprüche 14 und 15.

Wenn der Begriff "beispielsweise" in der nachfolgenden Beschreibung verwendet wird, bezieht sich dieser Begriff auf Ausführungsbeispiele und/oder Ausführungsformen, was nicht notwendigerweise als eine bevorzugtere Anwendung der Lehre der Erfindung zu verstehen ist. In ähnlicher Weise sind die Begriffe "vorzugsweise", "bevorzugt" zu verstehen, indem sie sich auf ein Beispiel aus einer Menge von Ausführungsbeispielen und/oder Ausführungsformen beziehen, was nicht notwendigerweise als eine bevorzugte Anwendung der Lehre der Erfindung zu verstehen ist. Dementsprechend können sich die Begriffe "beispielsweise", "vorzugsweise" oder "bevorzugt" auf eine Mehrzahl von Ausführungsbeispielen und/oder Ausführungsformen beziehen.

Die nachfolgende detaillierte Beschreibung enthält verschiedene Ausführungsbeispiele für das erfindungsgemässe Verfahren sowie eines Systems zur Durchführung des Verfahrens. Das Verfahren kann mittels eines Computerprogrammprodukts ausgeführt werden, sodass die Beschreibung eines bestimmten Computerprogrammprodukts nur als beispielhaft anzusehen ist. In der Beschreibung und den Ansprüchen werden die Begriffe "enthalten", "umfassen", "aufweisen" als "enthalten, aber nicht beschränkt auf.." interpretiert.

Das Verfahren zur interaktiven Schätzung von Baukosten oder Immobilienwerten für ein Gebäude enthält einen Schritt der Eingabe einer Eingabegrösse des Gebäudes in ein System, wobei die Eingabe einer Eingabegrösse eine Dateneingabe umfasst. Die Dateneingabe entspricht einer gewählten Gebäudekonfiguration, wobei die gewählte Gebäudekonfiguration auf einem Benutzergerät angezeigt wird. Der Benutzer kann die gewählte Gebäudekonfiguration anpassen, wenn die gewählte Gebäudekonfiguration nicht seinen Vorstellungen entspricht, wobei der Benutzer eine Datenanpassung vornimmt, wenn er die gewählte Gebäudekonfiguration verändert. Das System enthält einen Regler, wobei durch eine Betätigung des Reglers eine Veränderung der gewählten Gebäudekonfiguration erfolgt, sodass die Datenanpassung erfolgt. Das heisst, bei Veränderung der Reglereinstellung erfolgt die Datenanpassung. Die Betätigung des Reglers wird fortgesetzt, bis die gewählte Gebäudekonfiguration einer gewünschten Gebäudekonfiguration entspricht. Für die gewünschte Gebäudekonfiguration wird eine Analyse durchgeführt, um die Baukosten oder Immobilienwerte für die gewünschte Gebäudekonfiguration zu schätzen. Die Analyse für die gewählte Gebäudekonfiguration wird mittels eines prädiktiven Modells durchgeführt. Mittels des prädiktiven Modells kann ein Muster aus der gewählten Gebäudekonfiguration ermittelt werden, welches mit Gebäudekonfigurationen, die bereits im System gespeichert sind, verglichen werden kann. Zu den gespeicherten Gebäudekonfigurationen sind Informationen zu den Baukosten oder Immobilienwerten vorhanden. Mittels des prädiktiven Modells kann das Muster der gewählten Gebäudekonfiguration mit den bestehenden Mustern verglichen werden. Mittels Simulationsmodellen, Optimierungsmodellen, Regressionsanalysen oder Vergleichen kann die bestmögliche Übereinstimmung zwischen einem oder mehreren bestehenden Mustern und der gewählten Gebäudekonfiguration gefunden werden. Das Resultat der Analyse ist eine Schätzung der Baukosten oder Immobilienwerte der gewählten Gebäudekonfiguration. Bei dem Muster kann es sich insbesondere um ein Datenmuster handeln. Die Schätzung ist somit das Resultat der grösstmöglichen Übereinstimmung des Datenmusters der gewählten Gebäudekonfiguration und dem ähnlichsten Datenmuster der bestehenden Gebäudekonfiguration.

Das System kann ein Schätzmodul enthalten, mittels welchem die Analyse erstellt wird. Mittels des Schätzmoduls können die Baukosten oder Immobilienwerte für die gewählte Gebäudekonfiguration ermittelt werden. Das Schätzmodul kann ein Modellmodul umfassen, welches das prädiktive Modell enthält. Mittels des prädiktiven Modells kann unter Verwendung von in einem Datenspeichermodul oder in einem Referenzobjektspeichermodul gespeicherten Daten die interaktive Schätzung von Baukosten oder Immobilienwerten für ein Gebäude erfolgen. Insbesondere kann das Schätzmodul mittels eines Modellmoduls unter Verwendung von in einem Datenspeichermodul oder in einem Referenzobjektspeichermodul gespeicherten Daten die Baukosten oder Immobilienwerte für die gewählte Gebäudekonfiguration ermitteln.

Insbesondere können mittels des prädiktiven Modells Voreinstellungen basierend auf vorhandenen Daten ermittelt werden, wobei mittels des prädiktiven Modells eine Modellierung der gewählten Gebäudekonfiguration zur Bestimmung der Baukosten für die gewählte Gebäudekonfiguration erfolgt, wobei die Voreinstellungen für die gewählte Gebäudekonfiguration dem Benutzer angezeigt werden können. Der Regler kann vom Benutzer zur Veränderung der gewählten Gebäudekonfiguration betätigt werden, sodass der Benutzer die gewählte Gebäudekonfiguration anpassen kann, indem er die Voreinstellungen durch die Betätigung des Reglers verändert.

Die geänderten Voreinstellungen können mittels des prädiktiven Modells zur Durchführung einer weiteren Analyse verwendet werden, wobei die Datenanpassung in das prädiktive Modell übernommen wird, wobei die weitere Analyse der gewählten Gebäudekonfiguration zur Bestimmung der Baukosten für die gewählte Gebäudekonfiguration erfolgt, nachdem der Benutzer die Dateneingabe oder Datenanpassung abgeschlossen hat.

Nach einem Ausführungsbeispiel kann das Schätzmodul eine Prozessoreinheit umfassen, welche die Analyse mittels des prädiktiven Modells erstellt, wobei durch das Schätzmodul ein Bericht über die Baukosten oder Immobilienwerte für die gewählte Gebäudekonfiguration erstellt werden kann. Die Prozessoreinheit kann auf einen oder mehrere Datenspeicher zugreifen, um ein Simulationsmodell ein Optimierungsmodell oder eine Regressionsanalyse auszuführen. Aus der Regressionsanalyse kann eine Regressionsfunktion ermittelt werden, mittels welcher gegebenenfalls unter der Berücksichtigung eines manuellen Reglerwertes ein Resultat der Analyse ermittelbar ist.

Insbesondere kann eine Mehrzahl von Reglern bereitgestellt werden, wobei mittels jedes Reglers ein Parameter der Gebäudekonfiguration einstellbar ist. Nach einem Ausführungsbeispiel kann mittels des Reglers zumindest ein Parameter eingestellt werden, der die Komplexität oder Qualität des Gebäudes beschreibt. Unter Komplexität können beispielsweise die Grundstücks- und Bauplatzverhältnisse, Vorbereitungsarbeiten, Aussenwandkonstruktionen und Fassaden, die Repetition vorgefertigter Elemente, die Komplexität der Gebäudeform, der Fensteranteil verstanden werden.

Ein erster Parameter kann die Grundstücks- und Bauplatzverhältnisse charakterisieren. Dieser erste Parameter weist einen Minimalwert für Bauten in freiem Umfeld und einen Maximalwert für Bauten in abgelegenen Gebieten auf. Zwischen diesen beiden Extremwerten für diesen Parameter, die einerseits die kostengünstigste und andererseits die teuerste Lösung verkörpern, liegen Zwischenwerte für den ersten Parameter. Beispielsweise sind Bauten in freiem Umfeld durch ebene Grundstücke und grosszügige Platzverhältnisse charakterisiert. Sie befinden sich am Rand des Siedlungsgebiets, sind sehr gut erschlossen, weisen einfachste Zufahrt und Baustelleninstallation auf. Bauten in besiedeltem Gebiet bilden einen ersten Zwischenwert. Derartige Bauten in besiedeltem Gebiet sind gut erschlossen, weisen normale Zufahrt auf und verfügen über übliche Baustelleninstallationen. Als weiterer Zwischenwert, der zu Mehrkosten im Vergleich zum vorherigen Zwischenwert führt, sind Bauten in besiedeltem Gebiet mit geneigten Grundstücken anzusehen. Noch höhere Kosten sind für Bauten im innerstädtischen Gebiet und in Dorfzentren anzusetzen, insbesondere weil die Grundstücke beengt oder steil sind oder auf bestehende Infrastruktur, wie Flughäfen, Bahnhöfe, Bahngeleise Rücksicht genommen werden muss. Diese Bauten in Dorfzentren weisen einen Zwischenwert auf, der wiederum höher ist als für die vorhergehende Kategorie von Bauten. Insbesondere wenn die Zufahrt zu Bauten im innerstädtischen Gebiet oder in Dorfzentren erschwert ist, kann herfür ein weiterer Zwischenwert für den Parameter gebildet werden.

Ein zweiter Parameter kann die Vorbereitungsarbeiten charakterisieren. Der zweite Parameter weist einen Minimalwert für keine Vorarbeiten oder keine nennenswerten Vorarbeiten, insbesondere Rodungen, Anpassungen an bestehende Leitungen oder Verkehrsanlagen auf. Der zweite Parameter weist einen Maximalwert für Vorarbeiten in der Form von umfassenden Rückbauten und Sicherungsmassnahmen auf, wenn Nachbargebäude unterfangen oder gesichert werden müssen, wenn Altlasten entsorgt werden müssen, Pfählungen, Spriessungen oder besondere Vorkehrungen betreffend die Wasserhaltung vonnöten sind. Die Zwischenwerte für den zweiten Parameter charakterisieren zunehmende Rodungstätigkeit, zunehmenden Abbruchaufwand, zunehmende Anpassungen an Leitungen oder Verkehrsanlagen, zunehmende Hangsicherungen oder zunehmende Fundationen.

Ein dritter Parameter kann die Aussenwandkonstruktion und Fassade charakterisieren. Dieser Parameter kann ein Auswahlmenu umfassen, welches die Elemente einer nicht vorhandenen Aussenwand, einer nicht gedämmten Aussenwand, eines verputzen Einsteinmauerwerks, einer Sichtbetonfassade, einer Aussenwand mit Aussenwärmedämmung, einer hinterlüfteten Fassadenbekleidung, eines konventionellen Holzbaus, eines Holzelementbaus oder einer Vorhangfassade umfasst.

Ein vierter Parameter kann die Repetition vorgefertigter Elemente charakterisieren. Dieser Parameter kann einen Minimalwert für konventionelle Bauweise mit wenig gleichartigen Elementen, einen Maximalwert für eine systematisierte Bauweise aus systematisierten Elementbauten, mit Maximalanteil an Gleichteilen und einen Zwischenwert für eine vereinheitlichte Bauweise mit hohem Anteil an vorgefertigten Elementen umfassen.

Ein fünfter Parameter kann die Komplexität der Gebäudeform berücksichtigen. Dieser Parameter kann einen Minimalwert für eine sehr kompakte und einfache Gebäudeform annehmen, einen Maximalwert für eine komplexe Gebäudeform mit Lichthöfen, Eingangshallen, Gebäudedurchdringungen, Turmdächern mit Gauben und Lukarnen umfassen und mehrere Zwischenwerte, welche die zunehmenden Grad an Komplexität der Gebäudeform berücksichtigen.

Ein sechster Parameter kann den Fensteranteil berücksichtigen. Dieser Parameter kann einen Minimalwert für einen geringen Fensteranteil und einen Maximalwert für einen Fensteranteil von 90 - 100 % annehmen. Mehrere Zwischenwerte können einen zunehmenden Fensteranteil berücksichtigen.

Einer oder mehrere Parameter können die Qualität des Gebäudes charakterisieren. Unter Qualität können beispielsweise der Ausbau der Elektroanlage, der Heizungsanlage, Lüftungsanlage, Klimaanlage, Sanitäranlagen, Küche, der Ausbau der Substanz oder der Oberflächen sowie die Umgebung verstanden werden. Insbesondere kann der Ausbau der Elektroanlagen, der Heizungs- Lüftungs- und Klimaanlagen, der Sanitäranlagen, der Küche, der Ausbau der Substanz oder der Oberflächen sowie die Umgebung durch je einen Parameter erfasst werden.

Die Parameter können Daten zu bestehenden Gebäuden zugeordnet werden. Diese Daten umfassen die Komplexität oder Qualität von bereits erstellten und abgerechneten Gebäuden.

Unter Dateneingabe wird vorgängig auch die Auswahl aus einer Menge an Nutzungsarten des Gebäudes verstanden, die in einer Liste vorgegeben sind, beispielsweise Einfamilienhaus, Mehrfamilienhaus, Lagerhalle.

Nach einem Ausführungsbeispiel können die Daten von der Prozessoreinheit in eine Mehrzahl von Datengruppen gruppiert werden.

Die Daten können im Datenspeichermodul enthalten sein. Die Daten eines Referenzgebäudes können ebenfalls durch Einstellung jedes der Regler je einem Parameter zugeordnet werden, sodass jedes Referenzgebäude im Datenspeichermodul die Genauigkeit der Parameter erhöht. Ein Referenzobjektspeichermodul kann zur Speicherung von Daten von Referenzgebäuden vorgesehen sein. Insbesondere können Gebäude aus einer Vielzahl von Ortschaften, insbesondere Städten oder Dörfern, in die Datenbank aufgenommen werden, wobei die Datenbank die Referenzgebäude enthält. Die Genauigkeit der Schätzung der Baukosten oder Immobilienwerte kann somit mit zunehmender Datenmenge erhöht werden. Zudem ermöglicht die kontinuierliche Bereitstellung von Daten von Referenzgebäuden auch die Berücksichtigung von Änderungen der Baukosten oder Immobilienwerten über längere Zeiträume. Diese Änderungen können teuerungsbedingte Schwankungen in der Nachfrage abbilden, regulatorische Besonderheiten bestimmter Ortschaften, beispielsweise die Berücksichtigung von zusätzlichen Auflagen für Denkmalschutz, Unwetterschutz oder dergleichen sowie regulatorische Vorschriften neuer Normen und gesetzlicher Bestimmungen, insbesondere neue Bauvorschriften, berücksichtigen. Mit zunehmenden Betriebsjahren und zunehmenden Gebäudedaten für jede Ortschaft können auch historische Entwicklungen der Kosten für Gebäude in einzelnen Ortschaften im System abgebildet werden und in die Analyse mit einfliessen.

Dem Benutzer kann eine geänderte gewählte Gebäudekonfiguration nach der Betätigung des Reglers jedes der Regler auf dem Benutzergerät angezeigt werden, sodass der Benutzer vom System eine Rückmeldung betreffend seine Auswahl erhält. Die Rückmeldung kann als Illustration, Bild, Text, Video, oder als Animation erfolgen.

Die Analyse kann durch ein Schätzmodul erstellt werden. Das Schätzmodul kann mittels eines Modellmoduls unter Verwendung von in einem Datenspeichermodul oder in einem Referenzobjektspeichermodul gespeicherten Daten die Baukosten oder Immobilienwerte für die gewählte Gebäudekonfiguration ermitteln. Insbesondere kann das Modellmodul das prädiktive Modell oder eine Mehrzahl von prädiktiven Modellen enthalten. Durch das Schätzmodul kann ein Bericht über die Baukosten oder Immobilienwerte für die gewählte Gebäudekonfiguration erstellt werden. Die Dateneingabe und/oder der Datenpassung kann bei Bedarf wiederholt werden, falls der Bericht den Wünschen des Benutzers nicht entsprechen sollte.

Nach einem Ausführungsbeispiel kann der Zugang zum System durch ein Authentifizierungsverfahren erfolgen. Das Authentifizierungsverfahren kann die Registrierung des Benutzers umfassen.

Der Regler und die gewählte Gebäudekonfiguration können auf dem Benutzergerät visuell oder textlich derart dargestellt sein und korrelieren, dass die durch die entsprechend der Stellung des Reglers gerade gewählte Gebäudekonfiguration auf dem Benutzergerät angezeigt wird.

Nach einem Ausführungsbeispiel enthält das System ein Computerprogrammprodukt, wobei das Computerprogrammprodukt ein benutzerseitiges Teilsystem und ein betreiberseitiges Teilsystem umfasst, welche durch ein Netzwerk verbunden sind. Insbesondere kann das betreiberseitige Teilsystem das Schätzmodul zur Ermittlung der Baukosten oder Immobilienwerte enthalten. Das betreiberseitige Teilsystem kann ein Datenspeichermodul oder ein Referenzobjektspeichermodul sowie ein Modellmodul enthalten. Das benutzerseitige Teilsystem kann das Benutzergerät zur Dateneingabe enthalten, wobei das Benutzergerät den Regler zur Datenanpassung enthält. Die Datenanpassung wird gemäss diesem Ausführungsbeispiel als eine bauliche Modifikation des Gebäudes auf dem Benutzergerät angezeigt. Anhand der Modifikation des Gebäudes auf dem Benutzergerät ist insbesondere unmittelbar erkennbar, wie sich die Datenanpassung auf die gewählte Gebäudekonfiguration auswirkt.

Insbesondere kann die Eingabegrösse auf dem Benutzergerät angezeigt werden, wobei die Eingabe der Eingabegrössen in einer Eingabemaske erfolgen kann. Durch den Benutzer kann daher jederzeit eine visuelle Plausibilitätskontrolle der Dateneingabe und/oder Datenanpassung erfolgen.

Nach einem Ausführungsbeispiel kann der Benutzer in einem weiteren Schritt aus einer Mehrzahl von Alternativen, die auf dem Benutzergerät in Abhängigkeit von der Eingabegrösse angezeigt werden, auswählen. Der Regler zur Auswahl von Alternativen kann auf dem Benutzergerät visuell dargestellt sein, sodass die Alternativen auf dem Benutzergerät in Abhängigkeit von der Stellung des Reglers anzeigbar sind und vom Benutzer durch Betätigung eines Manipulationselements verändert werden können. Jede Alternative kann sich durch deren Darstellung auf dem Benutzergerät von jeder anderen Alternative unterscheiden, sodass dem Benutzer in Abhängigkeit seiner Auswahl eine der Alternative entsprechende eindeutige visuelle Anzeige präsentiert wird, sodass für den Benutzer anhand der Veränderung der visuellen Anzeige die gewählte Alternative unmittelbar erkennbar ist.

Ein System zur Schätzung von Baukosten oder Immobilienwerte für ein Gebäude enthält ein Computerprogrammprodukt. Das Computerprogrammprodukt umfasst ein benutzerseitiges Teilsystem und ein betreiberseitiges Teilsystem, welche durch ein Netzwerk verbindbar sind. Das betreiberseitige Teilsystem enthält ein Schätzmodul zur Ermittlung von Baukosten oder Immobilienwerten, ein Datenspeichermodul oder ein Referenzobjektspeichermodul sowie ein Modellmodul enthält. Das benutzerseitige Teilsystem enthält ein Benutzergerät zur Dateneingabe und zur Anzeige einer durch die Dateneingabe gewählten Gebäudekonfiguration. Das Benutzergerät enthält einen Regler. Insbesondere kann eine beliebige Modifikation des Gebäudes auf dem Benutzergerät anzeigbar sein. Der Regler kann zur Veränderung der gewählten Gebäudekonfiguration auf dem Benutzergerät justiert werden, bis die gewählte Gebäudekonfiguration einer gewünschten Gebäudekonfiguration entspricht. Durch das Schätzmodul ist eine Analyse für die gewünschte Gebäudekonfiguration erstellbar, um die Baukosten oder Immobilienwerte für die gewünschte Gebäudekonfiguration zu schätzen, wobei die Analyse für die gewählte Gebäudekonfiguration mittels eines prädiktiven Modellsystems, welches ein prädiktives Modell enthält, durchführbar ist. Beispielsweise kann die bauliche Modifikation durch eine Änderung einer graphischen Darstellung sichtbar oder erkennbar sein. Die graphische Darstellung kann insbesondere eine Illustration eines Gebäudes umfassen. Die Illustration kann durch die Veränderung des Reglers derart angepasst werden, dass beispielsweise die Gebäudeform, die Fassadenkonstruktion, die Installationen und/oder die Ausbauarbeiten verändert werden können.

Mittels des prädiktiven Modells können Voreinstellungen basierend auf im Datenspeichermodul oder dem Referenzobjektspeichermodul vorhandenen Daten ermittelbar sein, wobei mittels des prädiktiven Modells eine Modellierung der gewählten Gebäudekonfiguration zur Bestimmung der Baukosten für die gewählte Gebäudekonfiguration erfolgt, wobei die Voreinstellungen für die gewählte Gebäudekonfiguration dem Benutzer angezeigt werden können, wobei der Regler vom Benutzer zur Veränderung der gewählten Gebäudekonfiguration betätigt werden kann, sodass der Benutzer die gewählte Gebäudekonfiguration anpassen kann, indem er die Voreinstellungen durch die Betätigung des Reglers verändert, wobei die geänderten Voreinstellungen mittels des prädiktiven Modells zur Durchführung einer weiteren Analyse verwendbar sind, wobei die Datenanpassung in das prädiktive Modell übernehmbar ist, wobei die weitere Analyse der gewählten Gebäudekonfiguration zur Bestimmung der Baukosten für die gewählte Gebäudekonfiguration erfolgt, nachdem der Benutzer die Dateneingabe oder Datenanpassung abgeschlossen hat.

Insbesondere kann das prädiktive Modellsystem ein Eingabemodul, einen Datenspeicher, mindestens ein Simulationsmodell, eine Prozessoreinheit, ein Eingabe-/Ausgabegerät, eine Regelungseinheit sowie einen oder mehrere Speicher enthalten.

Nach einem Ausführungsbeispiel kann das System eine Zugangsbeschränkung umfassen. Das System kann einen oder mehrere Server umfassen.

Der Zugang zum System kann insbesondere über das Netzwerk erfolgen. Das Netzwerk kann mindestens ein Element aus der Gruppe der LAN, WAN, VPN, Intranets, Extranets, Internet oder eines mobilen Telekommunikationssystems umfassen. Der Zugang zum System kann über ein Portal erfolgen, insbesondere ein Internetportal.

Beispielsweise kann das System das Benutzergerät ein Anzeigegerät umfassen, welches eine optische oder akustische Anzeige bereitstellt. Beispielsweise kann die gewählte Gebäudekonfiguration als Illustration auf einem Bildschirm angezeigt werden. Alternativ kann die gewählte Gebäudekonfiguration auf dem Anzeigegerät als Ton, Text, Zeichnung, Video oder als dreidimensionales virtuelles räumliches Objekt angezeigt werden. Nach einem Ausführungsbeispiel können Gebäudeform, die Fassadenkonstruktion verändert werden.

Das Benutzergerät kann ein Element aus der Gruppe der PCs, Workstations, PDA (personal digital Assistent), Tablets, internetfähigen Fernsehgeräte, einer drahtlosen Kommunikationsvorrichtung, beispielsweise eines Smartphones umfassen.

Ein Verfahren gemäss der vorliegenden Erfindung hat gegenüber den bekannten Lösungen vor allem die nachfolgend angeführten Vorteile, indem die Anwendung des Verfahrens sehr einfach und kostengünstig ist und vom Benutzer keine technischen Vorkenntnisse erfordert, weil die Dateneingabe und/oder Anpassung über Regler intuitiv erfolgt. Die Resultate, also die Baukosten oder Immobilienwerte, sind jedermann somit jederzeit sofort verfügbar. Daher kann wesentlicher Vorteil des Verfahrens die schnelle Verfügbarkeit der Analyse angesehen werden. Aufgrund der Visualisierung durch eine dem zu wählenden Parameter zugeordneten Illustration, die beispielsweise als ein dreidimensionales vereinfachtes Schaubild ausgebildet sein kann, kann der Benutzer sich direkt und unmittelbar ein Bild davon machen, auf welche Weise der Regler den entsprechenden Parameter verändert. Daher kann der Benutzer innerhalb von einigen Sekunden den Regler derart einstellen, dass der Parameter den Gegebenheiten am bestehenden Gebäude oder den gewünschten Gegebenheiten an einem zu erstellenden Gebäude, also einem Gebäudeprojekt, entspricht.

Wenn beispielsweise bis zu 15 verschiedene Regler vorgesehen sind, kann mittels dieser Regler innerhalb von einem Zeitraum, der nicht mehr als 10 min betragen muss, eine verlässliche Spezifikation oder Klassifikation des Gebäudes oder Gebäudeprojekts vorgenommen werden.

Nach einem Ausführungsbeispiel kann der Benutzer ein Bild, beispielsweise ein Foto oder Video des Gebäudes, mittels einer Kamera aufnehmen. Aus dem Bild können Musterdaten generiert werden, welche den Reglern entsprechen. Somit kann das Verfahren das Bild auf diese Muster überprüfen, indem die Bildinformation von Datenmustern verglichen wird, welche den Voreinstellungen des oder der Regler entsprechen. Die Datenmuster können mittels der Simulationsmodelle, Optimierungsmodelle von der Prozessoreinheit derart aufbereitet werden, dass eine oder mehrere Regressionsanalysen zu einer Regressionsfunktion führen, welche aus den Datenmustern als Resultat die bestmögliche Schätzung der Baukosten oder Immobilienwerte liefert. Gegebenenfalls können die Datenmuster zu mehreren Datengruppen gehören, sodass die Verfahrensschritte für jede der Datengruppen durchgeführt werden können und Gruppenresultate ermittelt werden, die mittels einer Vergleichseinheit verglichen werden. Gegebenenfalls können die Reglerwerte auch manuell eingestellt oder nachjustiert werden. Mittels einer Vergleichseinheit können die Gruppenresultate verglichen werden und zur Übereinstimmung gebracht werden, sodass aus der bestmöglichen Übereinstimmung der Gruppenresultate eine bestmögliche Schätzung erhalten wird.

Nachfolgend wird das erfindungsgemässe Verfahren und System anhand einiger Ausführungsbeispiele dargestellt. Es zeigen
Fig. 1 eine Übersicht der Verfahrensschritte,
Fig. 2 ein Schaubild, welches die Verfahrensschritte Komponenten eines Systems zuordnet,
Fig. 3 eine Darstellung eines Ausführungsbeispiels eines Systems,
Fig. 4 ein Verfahren gemäss einem der vorherigen Ausführungsbeispiele zur Durchführung einer Analyse mittels eines prädiktiven Modells.
Fig. 5 ein Schema eines prädiktiven Modellsystems zur Durchführung eines Verfahrens zur Modellierung nach einem der vorhergehenden Ausführungsbeispiele.
Fig. 6 ein Verfahren gemäss einem weiteren Ausführungsbeispiel zur Durchführung einer Analyse mittels eines prädiktiven Modells.

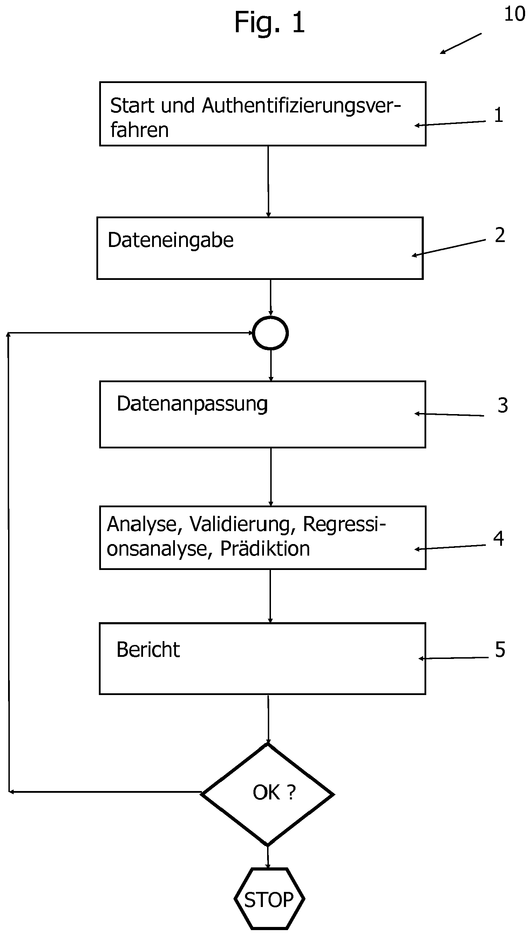

Fig. 1 zeigt ein Verfahren 10 zur Schätzung von Baukosten oder Immobilienwerten für ein Gebäude, enthaltend einen Schritt zur Eingabe einer Eingabegrösse des Gebäudes durch einen Benutzer. Insbesondere kann die Eingabegrösse die der Nutzungsart, der örtlichen Lage oder der Grundstücksgrösse für das Gebäude umfassen.

Die Eingabe einer Eingabegrösse umfasst somit eine Dateneingabe 2 durch den Benutzer. Das System 100 kann eine Zugangsbeschränkung umfassen. Die Zugangsbeschränkung ermöglicht eine Steuerung der Nutzung des Systems, indem der oder die Benutzer ein optionales Authentifizierungsverfahren 1 durchlaufen müssen, welches der Eingabe der Eingabegrösse vorgeschaltet ist. Nach Abschluss des Authentifizierungsverfahrens 1 ist es dem Benutzer möglich, das System zu nutzen und die Dateneingabe 2 zur Eingabe einer Eingabegrösse in das System vorzunehmen.

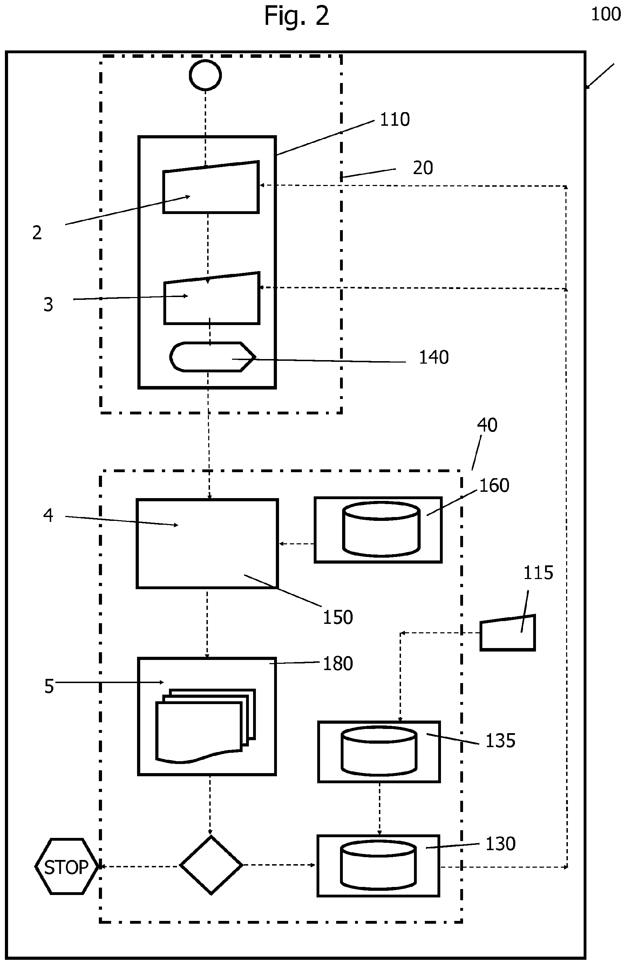

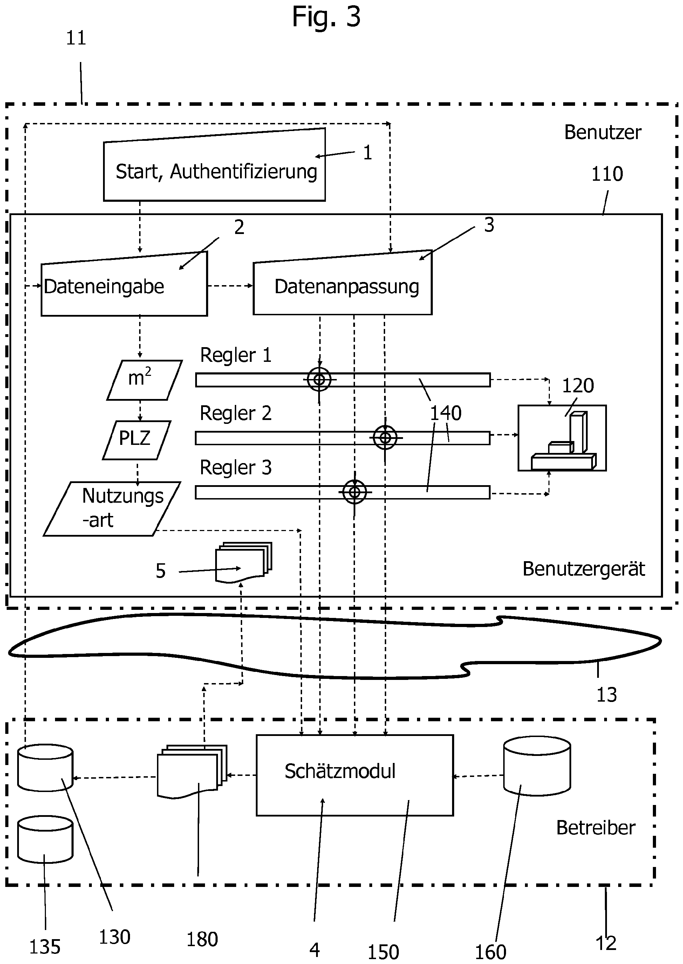

Die Dateneingabe 2 bewirkt die Auswahl einer Gebäudekonfiguration. Die gewählte Gebäudekonfiguration kann dem Benutzer angezeigt werden. Beispielsweise durch die Wahl der Nutzungsart des Gebäudes durch den Benutzer dann ein Regler 140 oder können die Regler 140 gemäss Fig. 2 oder Fig. 3 auf einen der Nutzungsart entsprechenden Durchschnittwert voreingestellt werden. Beispielsweise kann das System ein Benutzergerät 110 umfassen, welches eine optische oder akustische Anzeige bereitstellt. Beispielsweise kann die gewählte Gebäudekonfiguration als Illustration auf einem Bildschirm angezeigt werden. Alternativ kann die gewählte Gebäudekonfiguration auf dem Benutzergerät als Ton, als Text, als Zeichnung, als Video oder als dreidimensionales virtuelles räumliches Objekt angezeigt werden.

Der Benutzer kann die vom System 100 voreingestellte Gebäudekonfiguration oder die selbst gewählte Gebäudekonfiguration anpassen. Somit kann der Benutzer eine Datenanpassung 3 vornehmen, wenn die gewählte Gebäudekonfiguration nicht seinen Vorstellungen entspricht. Dem Benutzer wird vom System 100 ein Regler 140 zur Verfügung gestellt, was in Fig. 2 oder Fig. 3 gezeigt ist. Der Regler 140 kann vom Benutzer betätigt werden. Durch die Betätigung des Reglers 140 wird insbesondere die vom System 100 voreingestellte Gebäudekonfiguration durch den Benutzer angepasst.

Eine Mehrzahl von Reglern 140 kann bereitgestellt werden, wobei mittels jedes Reglers 140 ein Parameter der Gebäudekonfiguration einstellbar ist. Ein Parameter kann die Komplexität oder die Qualität des Gebäudes umfassen. Ein Regler kann als Schieberelement ausgebildet sein oder ein Auswahlelement umfassen, aus welchem der Benutzer eine Auswahl trifft. Das Auswahlelement kann dem Benutzer ein Auswahlmenu bereitstellen.

Dem Benutzer wird die Auswirkung der Betätigung des Reglers 140 oder jedes der Regler auf dem Benutzergerät 110 angezeigt. Der Benutzer erhält somit vom System 100 unmittelbar eine Rückmeldung betreffend seine Auswahl.

Entspricht die Auswahl der Gebäudekonfiguration den Vorstellungen des Benutzers, kann der Benutzer die Analyse 4 der gewünschten Gebäudekonfiguration unter Verwendung des Schätzmoduls 150 vornehmen. Das Schätzmodul 150 kann die Analyse 4 erstellen, bei der es sich um eine Validierung, Prädiktion oder eine Regressionsanalyse handeln kann. In einem nächsten Schritt kann sich der Benutzer einen Bericht 5 über die Baukosten oder Immobilienwerte für die gewünschte Gebäudekonfiguration vom System 100 erstellen lassen. Dieser Bericht kann auf dem Benutzergerät 110 angezeigt werden oder der Bericht 5 kann in eine Druckdatei transformiert werden, um bei Bedarf ausgedruckt zu werden.

Entspricht der Bericht 5 den Vorstellungen des Benutzers, kann der Benutzer das System 100 verlassen. Insbesondere kann der Benutzer sich mittels des Authentifizierungsverfahrens 1 abmelden. Entspricht der Bericht 5 nicht den Vorstellungen des Benutzers, kann er nach einer Neuanmeldung beim System eine andere Eingabegrösse auswählen oder im Rahmen derselben Sitzung erneut eine Dateneingabe 2 vornehmen oder erneut den Schritt der Datenanpassung 3 vornehmen. Dann kann der Benutzer wiederum die Analyse 4 durchführen und einen weiteren Bericht 5 erstellen. Diese Schritte können beliebig oft wiederholt werden, solange bis der Bericht 5 den Vorstellungen des Benutzers entspricht.

Das System 100 enthält gemäss Fig. 2 oder 3 ein Benutzergerät 110, ein Datenspeichermodul 130, gegebenenfalls ein Referenzobjektspeichermodul 135, einen Regler 140, ein Schätzmodul 150, ein Modellmodul 160, ein Berichterstellungsmodul 180, welche als ein Computerprogrammprodukt ausgebildet sein können. Jede Systemkomponente, wie beispielsweise das Benutzergerät 110, das Datenspeichermodul 130, das Schätzmodul 150, das Berichterstellungsmodul 180 sind miteinander mittels Datenverbindungen koppelbar, sodass ein Datenaustausch zwischen den Systemkomponenten stattfinden kann. Wenn ein Referenzobjektspeichermodul 135 vorgesehen ist, kann eine Referenzobjektdateneingabe 115 vorgesehen sein.

Durch eine Datenverbindung können dem Schätzmodul 150 Daten als Gebäudedatensatz, die durch die Dateneingabe 3 bzw. Datenanpassung 3 erzeugt worden sind, sowie Daten dem Modellmodul 160 zur Durchführung der Analyse 4 zur Verfügung gestellt werden. Die vom Benutzergerät 110 ans Schätzmodul 150 übermittelten Daten werden in eine Rohdatendank eingelesen. Die Rohdatenbank kann ein Abgleichmodul enthalten, welches die von der Dateneingabe 2 oder Datenanpassung 3 erhaltenen Daten mit in einer Rohdatenbank gespeicherten Daten zu dem Gebäude vergleichen kann. Die Rohdatenbank kann im Datenspeichermodul 130 enthalten sein. Für den Gebäudedatensatz werden durch das Schätzmodul 150 unter Rückgriff auf das Modellmodul 160 die Baukosten oder Immobilienwerte berechnet. Die Ergebnisse dieser Berechnung werden in das Berichterstattungsmodul 180 eingespeist, wobei der Bericht 5 generiert wird, der dem Benutzer auf dem Benutzergerät 110 angezeigt werden kann. Wenn die Baukosten oder Immobilienwerte des Berichts 5 den Vorstellungen des Benutzers noch nicht entsprechen, kann der Benutzer den Regler 140 betätigen, bzw. so lange anzupassen, bis der Bericht 5 seinen Vorstellungen entspricht.

Das System 100 gemäss Figur 3 weist ein benutzerseitiges Teilsystem 11 und ein betreiberseitiges Teilsystem 12 auf, welche örtlich getrennt sein können. Das benutzerseitige Teilsystem 11 kann über ein Netzwerk 13, beispielsweise über das Internet mit dem betreiberseitigen Teilsystem 12 interagieren. Das benutzerseitige Teilsystem 11 enthält ein Benutzergerät 110, einen Regler 140. Das betreiberseitige Teilsystem 12 kann einen Server umfassen, der ein Schätzmodul 150, ein Modellmodul 160 ein Datenspeichermodul 130, ein Referenzobjektspeichermodul 135 sowie ein Berichterstellungsmodul 180 umfasst. Der Server kann ein Webservermodul oder ein Webserverapplikationsmodul enthalten, welches zur Übertragung von Daten aus dem Internet oder in das Internet ausgebildet ist. Der Server kann mit dem benutzerseitigen Teilsystem interagieren und Daten im Datenspeichermodul 130 speichern, Daten aus dem Datenspeichermodul 130 auslesen, Rechenoperationen unter Verwendung der Daten, welche vom benutzerseitigen Teilsystem 11 übermittelt worden sind, im Schätzmodul 150 ausführen. Das benutzerseitige Teilsystem 11 kann die Dateneingabe 2, die Datenanpassung 3 und eine Authentifizierung oder eine Zahlungsroutine, ermöglichen. Jede Systemkomponente des benutzerseitigen Teilsystems 11, wie beispielsweise das Benutzergerät 110, ist mit mindestens einer anderen Systemkomponente des betreiberseitigen Teilsystems 12 mittels Datenverbindungen koppelbar, sodass ein Datenaustausch zwischen dem benutzerseitigen Teilsystem 11 und dem betreiberseitigen Teilsystem 12 stattfinden kann. Das Datenspeichermodul 130 des betreiberseitigen Teilsystems 12, das Schätzmodul 150, sowie das Berichterstellungsmodul 180 sind mit mindestens einer anderen Systemkomponente des benutzerseitigen Teilsystems 11 mittels Datenverbindungen koppelbar, sodass ein Datenaustausch zwischen den dem benutzerseitigen Teilsystem 11 und dem betreiberseitigen Teilsystem 12 stattfinden kann.

Das benutzerseitige Teilsystem 11 und das betreiberseitige Teilsystem 12 sind insbesondere über ein Netzwerk 13, beispielsweise das Internet koppelbar. Hierzu kann das benutzerseitige Teilsystem 11 insbesondere einen Browser aufweisen, und das betreiberseitige Teilsystem 12 kann ein Webapplikationsservermodul oder ein Webservermodul aufweisen.

Der Regler 140 kann auf dem Benutzergerät 110 angezeigt werden. Gemäss dem vorliegenden Ausführungsbeispiel ist der Regler 140 als Schieberelement ausgebildet. Das Schieberelement ist als ein Manipulationselement ausgebildet, welches beispielsweise als Balken, Kreis, Punkt auf dem Benutzergerät 110 dargestellt ist und durch Einwirkung des Benutzers verschoben werden kann. Die Einwirkung des Benutzers kann beispielsweise die Steuerung eines Zeigers, insbesondere eines Cursors, umfassen oder die Berührung einer berührungssensitiven Oberfläche durch den Benutzer, wie beispielsweise auf einem Tablet, Touchscreen oder einem mobilen Endgerät, beispielsweise einem Smartphone. Alternativ oder in Ergänzung kann der Benutzer den Schieber des Reglers auch berührungslos steuern, beispielsweise über Sprachkommandos.

Anstelle eines Cursors kann ein berührungssensitives Eingabeelement auf dem Bildschirm erscheinen, der als Touchscreen ausgebildet sein kann. Der Benutzer kann den Cursor oder das berührungssensitive Eingabeelement manuell bewegen. Alternativ kann der Regler 140 auch eine Zeichenfolge, beispielsweise eine Zahlenkombination, einen Buchstaben, ein Icon oder Bildelement umfassen. Eine Mehrzahl von Zeichenfolgen kann dem Benutzer zur Auswahl auf dem Benutzergerät 110 angezeigt werden. Anstelle oder in Ergänzung zu einer visuellen Anzeige kann der Benutzer auch eine akustische Information erhalten.

Das Schieberelement kann kontinuierlich von einem Balkenende zum gegenüberliegenden Balkenende verschoben werden oder es kann eine Position aus einer Mehrzahl von diskreten Positionen auf dem Balken angewählt werden. Derartige Positionen entsprechen Zwischenwerten oder einem Maximalwert und einem Minimalwert für den entsprechenden Parameter. Ein derartiger Zwischenwert kann beispielsweise eine Wertklasse umfassen. Einer derartigen diskreten Position kann eine Darstellung zugeordnet werden, das heisst es kann einer diskreten Position eine bestimmte Illustration 120 oder ein Text zugeordnet sein, der auf dem Benutzergerät 110 angezeigt wird, wenn diese diskrete Position ausgewählt ist. Der Benutzer erhält somit unmittelbar eine Rückmeldung, welchen baulichen Gegebenheiten oder Spezifikationen die ausgewählte Position entspricht. Jede der Positionen kann eine Alternative umfassen. Jede der Alternativen kann sich durch deren bildliche und/oder textliche Darstellung auf dem Benutzergerät 110 unterscheiden, sodass dem Benutzer in Abhängigkeit seiner Auswahl eine der Auswahl entsprechende optische und/oder textliche Anzeige präsentiert wird, sodass für den Benutzer anhand der Veränderung der optischen und/oder textlichen Anzeige unmittelbar erkennbar ist, wie sich die Alternative auf die Gebäudekonfiguration und schlussendlich auf die Baukosten oder Immobilienwerte auswirkt. Insbesondere können eine bildliche und textliche Darstellung miteinander korreliert sein, sodass dem Benutzer bei Auswahl einer bildlichen Darstellung die zu der Alternative gehörige Information in Textform präsentiert wird.

Jeder der Parameter, der mittels der Regler anwählbar ist, kann zumindest durch die Wahl der Nutzungsart beispielsweise der Einfamilienhäuser, Mehrfamilienhäuser, Reihenhäuser bestimmt sein, wobei jede Nutzungsart mit einer städtischen, dörflichen oder ländlichen Umgebung oder der Lage in einem Ballungsraum oder einer Agglomeration kombinierbar ist. Für jede Nutzungsart kann die Daten die Anzahl der Sanitärräume sowie die Fläche der Zimmer sowie die gesamte Wohnfläche umfassen. Auch die Steuerbelastung in den Gemeinden oder die Anbindung an Infrastruktur, wie beispielsweise öffentliche Verkehrsmittel, Einkaufsmöglichkeiten, Kindergärten und Schulen, Freizeitmöglichkeiten können erfasst werden.

Insbesondere wird der Schieber des Reglers 140 oder jeder der Regler 140 auf die vom Benutzer gewünschte Position verschoben. Während der Bewegung des Schiebers kann auf dem Benutzergerät 110 eine Illustration 120 erscheinen, welche die Veränderung des zu regelnden Parameters, also die Regelgrösse, zeigt. Der Benutzer erhält daher in Echtzeit die Änderung des betreffenden Parameters angezeigt. Gekoppelt mit der Illustration 120 kann auch Beschreibungstext auf dem Benutzergerät 110 angezeigt werden. Der Beschreibungstext dient dem Benutzer als zusätzliche Informationsquelle, um abzuschätzen, wie der Parameter die Komplexität oder Qualität des Gebäudes beeinflusst.

Der Regler 140 kann insbesondere als Auswahlelement ausgebildet sein.

Wenn eine Authentifizierung des Benutzers erfolgen soll, kann der Benutzer im Browser in einer Anmeldemaske einen Benutzernamen sowie ein Kennwort eingeben, welches die Durchführung einer Schätzung der Baukosten oder die Ermittlung eines Immobilienwerts ermöglicht und den Zugang zur Datenanpassung 3 freischaltet, sowie dem Benutzer die Bedienung des Systems 100 im Rahmen der mit der Authentifizierung erteilten Benutzerrechte ermöglicht.

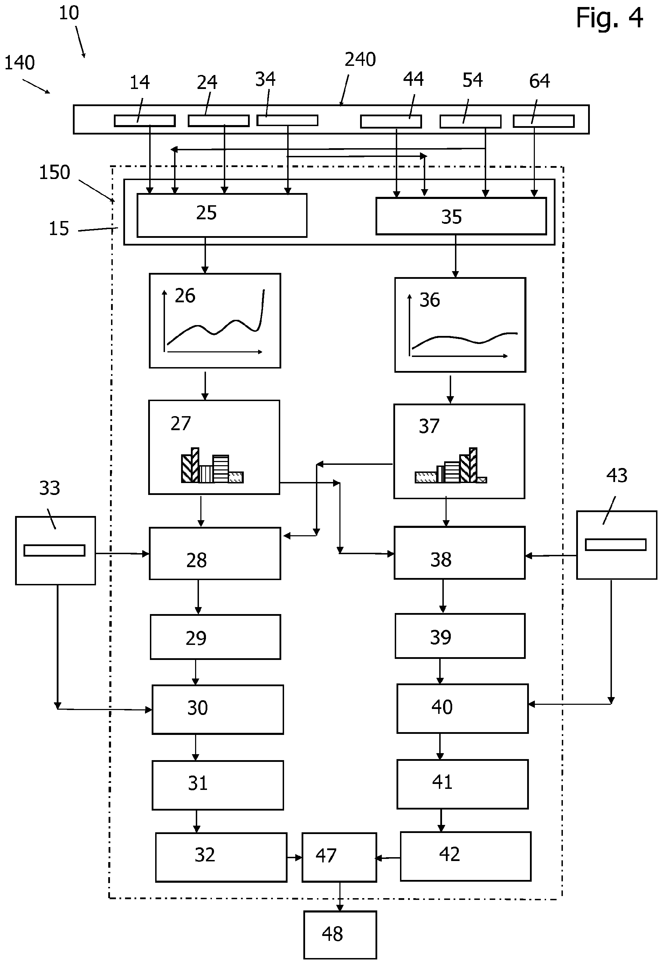

Fig. 4 zeigt ein Verfahren 10 gemäss einem der vorherigen Ausführungsbeispiele zur Durchführung einer Analyse 4 mittels eines prädiktiven Modells. Das Schätzmodul 150 umfasst eine Prozessoreinheit 15, welche die Analyse 4 mittels des prädiktiven Modells erstellt, was in Fig. 2 gezeigt ist. Wahlweise kann durch das Schätzmodul 150 ein Bericht 5 über die Baukosten oder Immobilienwerte für die gewählte Gebäudekonfiguration erstellt werden. Das Verfahren kann somit mittels der Prozessoreinheit 15 durchgeführt werden kann, die Bestandteil einer Datenverarbeitungsvorrichtung oder eines Datenverarbeitungssystems sein kann. Das Verfahren 10 kann mittels einer Mehrzahl von Prozessoreinheiten 15 durchgeführt werden, wobei die Prozessoreinheiten 15 in einer oder mehreren Datenverarbeitungsvorrichtungen oder Datenverarbeitungssystemen enthalten sein können.

Über ein Benutzergerät 110 kann der Benutzer mit der Datenverarbeitungsvorrichtung oder dem Datenverarbeitungssystem kommunizieren. Die Datenverarbeitungsvorrichtung oder das Datenverarbeitungssystem kann lokal auf einem PC oder einem mobilen Endgerät des Benutzers enthalten sein oder sich auf einem Server befinden, welcher über ein Netzwerk, beispielsweise das Internet mit dem PC oder mobilen Endgerät des Benutzers verbindbar ist. Das Ausgabegerät 120 umfasst eine Anzeigeeinheit, welche eine Abbildung des oder der Regler 140 gemäss den vorherigen Ausführungsbeispielen enthält. Jeder dieser Regler 140 weist einen ihm zugeordneten Reglerwert 14, 24, 34 auf. In der vorliegenden Darstellung sind exemplarisch drei Reglerwerte 14, 24, 34 dargestellt, diese Zahl ist aber nur als Beispiel anzusehen. Das Verfahren kann für eine beliebige Anzahl an Reglerwerten durchgeführt werden. Der Benutzer kann jeden der Regler 140 auswählen und kann jeden zugehörigen Reglerwert 14, 24, 34 auf dem Ausgabegerät sehen, welches eine entsprechende Anzeigeeinheit umfasst. Der auf der Anzeigeeinheit dargestellte Reglerwert 14, 24, 34 zeigt eine Voreinstellung, welche mittels des prädiktiven Modells ermittelt worden ist. Die Voreinstellung kann graphisch auf dem Ausgabegerät 120 visualisiert werden, beispielsweise kann die dem Reglerwert entsprechende Gebäudeausstattung visuell auf der Anzeigeeinheit dargestellt sein.

Die Prozessoreinheit 15 kann auf einen oder mehrere Datenspeicher zugreifen, um ein Simulationsmodell 28, 38, ein Optimierungsmodell 29, 39 oder eine Regressionsanalyse 30, 40 auszuführen. Im Datenspeicher sind sämtliche Daten enthalten, welche mit den Reglerwerten 14, 24, 34 verknüpfbar sind oder verknüpft sind. Mittels der Prozessoreinheit 15 kann aus der Regressionsanalyse 30, 40 eine Regressionsfunktion 31, 41 ermittelt werden, mittels welcher gegebenenfalls unter der Berücksichtigung eines manuellen Reglerwertes 33, 43 ein Resultat der Analyse 4 ermittelbar ist.

Die Daten können von der Prozessoreinheit 15 in eine Mehrzahl von Datengruppen 25, 35 gruppiert werden. Jede der Datengruppen 25, 35 weist zueinander ähnliche Eigenschaften auf. Die Daten jeder der Datengruppen weisen ein ähnliches Muster auf, welches für die Zugehörigkeit zu der Datengruppe charakteristisch ist. Das Muster kann beispielsweise durch ähnliche Parametereinstellungen erhalten werden. Die Prozessoreinheit 15 kann die Daten den jeweiligen Datengruppen durch ein Vergleichsverfahren zuordnen. Mittels des Vergleichsverfahrens werden die Daten miteinander verglichen. Die Daten, welche zueinander ähnliche Eigenschaften aufweisen, werden der entsprechenden Datengruppe 25, 35 zugeordnet. Durch die Verwendung von Datengruppen kann der Aufwand für die Datenanalyse und das Datenmanagement reduziert werden. Anstelle der Datenanalyse des gesamten Datensets kann die Analyse auf ein repräsentatives Subset beschränkt werden. Da die Daten einer Datengruppe ähnliche Eigenschaften aufweisen, ist das zu erwartende Ergebnis der Datenanalyse für die Daten der Datengruppe gleich oder zumindest nur mit geringen Abweichungen verbunden, sodass die Analyse des repräsentativen Subsets ein qualitativ zufriedenstellendes Ergebnis liefert, was mittels einer wesentlichen Ressourceneinsparung an Rechenzeit erzielt werden kann, weil nicht jedes einzelne Datum der Datengruppe individuell analysiert werden muss. Die Genauigkeit der Prädiktion kann durch die Verwendung von Datengruppen erhöht werden, weil durch die Verwendung von Datengruppen ein Optimum schneller und zudem mit höherer statistischer Signifikanz ermittelbar ist.

Beispielsweise können Daten, welche die Grundstücks- oder Bauplatzverhältnisse charakterisieren, zu einer Datengruppe 25 zusammengefasst werden. Da die Grundstücks- oder Bauplatzverhältnisse beispielsweise mit der örtlichen Lage in Bezug auf das Zentrum eines Siedlungsraums und der Hangneigung korreliert sind, kann ein charakteristischer Beispielwertverlauf 26, beispielsweise ein Datengruppenmittelwertverlauf oder ein Schwerpunktswertverlauf für diese Datengruppe 25 ermittelt werden. Mit diesem Beispielwertverlauf 26 kann die Datengruppe als mathematische Funktion abgebildet werden.

Beispielsweise können Daten, welche die Vorbereitungsarbeiten charakterisieren, zu einer Datengruppe 35 zusammengefasst werden. Da die Vorbereitungsarbeiten beispielsweise dem Alter des Bauwerks oder mit der Höhe des Bauwerks korreliert sind, kann ein charakteristischer Beispielwertverlauf 36, beispielsweise ein Datengruppenmittelwertverlauf oder ein Schwerpunktswertverlauf für diese Datengruppe 35 ermittelt werden. Mit diesem Beispielwertverlauf 36 kann die Datengruppe 35 als mathematische Funktion abgebildet werden.

Mittels des Beispielwertverlaufs 26, 36 kann ein Datenmuster 27, 37 ermittelt werden. Die Datengruppen 25, 35 können vom Prozessor unter Verwendung des charakteristischen Beispielwertverlaufs 26, 36 unter Anwendung stochastischer Verfahren zur Bestimmung eines stochastischen Modells oder einer Wahrscheinlichkeitsverteilung in der Prozessoreinheit 15 analysiert werden. Das Ergebnis dieser Analyse ist das Datenmuster 27, 37, welches selbst ein Modell oder eine Gleichung sein kann, welche den Beispielwertverlauf 26, 36 für die gesamte entsprechende Datengruppe 25, 35 repräsentiert. Der Beispielwertverlauf 26, 36 kann somit die mathematische Funktion für je einen Ort sowie je eine Neigung darstellen, das entsprechende Datenmuster 27, 37 kann eine Wahrscheinlichkeitsfunktion umfassen, welche eine Wahrscheinlichkeit für das Auftreten eines bestimmten Beispielwertverlaufs 26, 36 modelliert. Beispielsweise können mittels einer Wahrscheinlichkeitsfunktion das Datenmuster der Gebäudeformen, welche in der Vergangenheit für bestimmte Grundstücks- oder Bauplatzverhältnisse charakteristisch gewesen sind, simuliert werden. Beispielsweise kann der Beispielwertverlauf 26 eine mathematische Funktion für die Kosten für Vorbereitungsarbeiten umfassen. Mittels eines stochastischen Verfahrens zur Bestimmung eines stochastischen Modells oder einer Wahrscheinlichkeitsverteilung können die Daten der Datengruppe 35 in der Prozessoreinheit 150 analysiert werden. Das Datenmuster 37 kann eine Wahrscheinlichkeitsfunktion umfassen, mittels welcher die Wahrscheinlichkeit der anfallenden Kosten für Vorbereitungsarbeiten an einem bestimmten Standort modelliert wird.

Der Beispielwertverlauf 26 ist somit charakteristisch für das Datenmuster 27, der Beispielwertverlauf 36 ist charakteristisch für das Datenmuster 37. Selbstverständlich können eine beliebige Anzahl von weiteren Datengruppen vorgesehen sein, der Einfachheit halber wurde in diesem Beispiel gemäss Fig. 4 auf die Erwähnung weiterer Datengruppen verzichtet. Insbesondere kann jeder der Parameter der Gebäudekonfiguration, welcher mittels jedem der Regler einstellbar ist, mindestens je eine Datengruppe ausbilden.

Jedes der Datenmuster 27, 37 kann in eines oder mehrere Simulationsmodelle 28, 38 zur Schätzung der Baukosten oder Immobilienwerte eingespeist werden.

Wenn der Benutzer einen der Regler 140 betätigt, wird der entsprechende Reglerwert überschrieben. Jeder manuell eingegebene Reglerwert 33, 43 kann als eine Betriebsvariable in das entsprechende Simulationsmodell 28, 38 mit einfliessen. Die manuell eingegebenen Reglerwerte 33, 43 werden von der Prozessoreinheit 150 erfasst. Jeder der manuellen Reglerwerte 33, 43 wird in das entsprechend der Datengruppe 25, 35 und dem zugehörigen Datenmuster 27, 37 wird von der Prozessoreinheit 150 zur Bestimmung des zugehörigen Simulationsmodells 28, 38 in ein Basis-Simulationsmodell eingespeist, mittels welchem das entsprechende Simulationsmodell 28, 38 ermittelt wird. Das Simulationsmodell 28 kann beispielsweise verschiedene Grundstücks- oder Bauplatzverhältnisse modellieren. Das Simulationsmodell 38 kann verschiedene Vorbereitungsarbeiten modellieren. Für jeden Regler kann ein eigenes Simulationsmodell in der Prozessoreinheit 150 vorhanden sein, die beiden genannten Beispiele stehen exemplarisch für jeden anderen in dieser Anmeldung genannten Regler oder hiermit vergleichbaren Regler.

Jedes der Simulationsmodelle 28, 38 kann mittels jedem der Datenmuster 27, 37 sowie mit den manuell eingegebenen Reglerwerten 33, 43 angepasst oder justiert werden.

Jedes der Simulationsmodelle 28, 39 kann verschiedene Arten von Schätzungen von Baukosten oder Immobilienwerten modellieren. Beispielsweise kann das Simulationsmodell 28 Schätzungen für Baukosten oder Immobilienwerten modellieren, welche eine Vorhersage bei Verwendung der kostengünstigsten Materialien und der einfachsten Ausstattung des Gebäudes ermöglicht. Dieses Simulationsmodell 28 soll nachfolgend auch als einfaches Simulationsmodell 28 bezeichnet werden. Beispielsweise kann das Simulationsmodell 38 Schätzungen für Baukosten oder Immobilienwerten modellieren, welche eine Vorhersage bei Verwendung von hochwertigen Materialien und einer komplexen Ausstattung des Gebäudes ermöglicht. Dieses Simulationsmodell 38 soll nachfolgend auch als komplexes Simulationsmodell 38 bezeichnet werden.

Das einfache Simulationsmodell 28 kann aus einem Basis-Simulationsmodell erhalten werden, welches auf das gewählte Datenmuster 27 und den oder die eingegebenen Reglerwerte 33 zugeschnitten ist.

Das komplexe Simulationsmodell 38 kann aus demselben Basis-Simulationsmodell erhalten werden, welches auf das gewählte Datenmuster 37 und den oder die eingegebenen Reglerwerte 43 zugeschnitten ist.

Alternativ oder in Ergänzung hierzu kann ein Misch-Simulationsmodell aus dem Basis-Simulationsmodell erhalten werden, welches auf das gewählte Datenmuster 27 oder das Datenmuster 37 und/oder den oder die eingegebenen Reglerwerte 33, 43 zugeschnitten ist.

Im Anschluss an die Ermittlung der Simulationsmodelle 28, 38 kann mittels der Prozessoreinheit 150 eine Optimierung der Simulationsmodelle 28, 38 erfolgen, welches zu den Optimierungsmodellen 29, 39 führt. Die Optimierungsmodelle 29, 39 werden durch die Ausführung wiederholter Simulationen durch die Prozessoreinheit 150 erhalten, wobei verschiedene Kombinationen der eingegebenen Reglerwerte 33, 43 oder der Datenmuster 27, 37 verwendet werden, um einen Bereich von zulässigen Parameterwerten zu ermitteln. Zudem können die eingegebenen Reglerwerte 33, 43 oder die Datenmuster 27, 37 von der Prozessoreinheit 150 variiert werden, um optimale Parameterwerte für eine optimale Schätzung für die Baukosten oder Immobilienwerte zu erhalten. Um somit eine optimale Vorhersage der Baukosten oder Immobilienwerte zu erhalten, werden daher die eingegebenen Reglerwerte 33, 43 oder die Datenmuster 27, 37 so oft variiert, bis die Schätzung der Baukosten oder Immobilienwerte den optimalen Wert erreicht hat.

Mittels den Optimierungsmodellen 29, 39 werden optimierte Betriebsparameter erhalten, mittels welchen durch die Prozessoreinheit 150 eine Regressionsanalyse 30, 40 für die entsprechenden optimierten Betriebsparameter durchgeführt wird. Die Regressionsanalyse 30, 40 verwendet Regressionsgleichungen zur Ermittlung der bestmöglichen Übereinstimmung der Daten der entsprechenden Datengruppe 25, 35. Die optimierten Betriebsparameter bilden hierbei die unabhängigen Variablen, der oder die optimalen Werte der Schätzung der Baukosten oder Immobilienwerte die abhängigen Variablen. Aus der Regressionsanalyse 30, 40 werden Regressionsgleichungen ermittelt, welche die Schätzung der Baukosten oder Immobilienwerte basierend auf den Datengruppen 25, 35 modellieren. Mittels der Regressionsgleichungen ist somit eine Gruppenregressionsfunktion 31, 41 erhältlich. Mittels der Prozessoreinheit 150 kann durch Berechnung der Gruppenregressionsfunktion 31, 41 aus den optimierten Betriebsparametern mit den gegebenenfalls durch den Benutzer angepassten manuellen Reglerwerten 33, 43 ein Gruppenresultat 32, 42 erhalten werden, welches eine Vorhersage für die Schätzung der Baukosten oder Immobilienwerte enthält. Wenn mehrere Regressionsanalysen 30, 40 parallel erstellt werden, kann die Prozessoreinheit für jede der Regressionsanalysen 30, 40 eigene Regressionsgleichungen und somit je eine Gruppenregressionsfunktion 31, 41 ermitteln. Daher können parallel für verschiedene Varianten der optimierten Betriebsparameter und gegebenenfalls der manuellen Reglerwerte 33, 43 verschieden Gruppenresultate 32, 42 erhalten werden. Selbstverständlich ist es möglich, dass die Anzahl der Gruppenresultate 32, 42 grösser oder kleiner ist als die Anzahl der Optimierungsmodelle 29, 39, der Regressionsanalysen 30, 40 oder der Gruppenregressionsfunktionen 31, 41.

Wenn eine Mehrzahl von Gruppenresultaten 32, 42 ermittelt worden ist, kann die Prozessoreinheit 150 diese Gruppenresultate 32, 42 miteinander vergleichen. Hierzu kann die Prozessoreinheit 150 eine Vergleichseinheit 47 enthalten. Mittels der Vergleichseinheit 47 können die Gruppenresultate 32, 42 verglichen werden und das Vergleichsergebnis 48 auf dem Ausgabegerät 120 (siehe Fig. 3) angezeigt werden. Wahlweise kann die Vergleichseinheit 47 eine Rangordnung der Gruppenresultate 32, 42 anzeigen. Wahlweise können die Gruppenresultate 32, 42 nach verschiedenen Kriterien gewichtet werden, sodass optimale Schätzungen unter der Berücksichtigung unterschiedlicher Szenarios anzeigbar sind. Insbesondere können die je nach Kombination der Datengruppen 25, 35 in den Simulationsmodellen 28, 38, den Optimierungsmodellen 29, 39 oder den Regressionsanalysen 30, 40 erhaltenen unterschiedlichen Gruppenresultate 32, 42 miteinander verglichen werden, sodass der Einfluss jeder Datengruppe 25, 35 auf die Gruppenresultate 32, 42 oder das Vergleichsergebnis 48 erkennbar ist.

Daher können die Haupteinflussfaktoren für das oder jedes Vergleichsergebnis 48 oder jedes der Vergleichsergebnisse 48 bestimmt werden. Für jede Schätzung der Baukosten oder Immobilienwerte ist die Sensitivität des Vergleichsergebnisses 48 in Bezug auf Änderung jedes der Reglerwerte 24, 34 bzw. jeder der Datengruppen 25, 35 quantitativ beurteilbar. Dem Benutzer kann eine auf dem gesamten vorhandenen Datenmaterial abgestützte quantitative Bewertung der Qualität des Vergleichsergebnisses, also der Schätzung angezeigt werden. Eine höhere Qualität des Vergleichsergebnisses hat auch eine Verringerung des Risikos einer unzutreffenden Schätzung zur Folge, was eine präzisere Planung ermöglicht.

Das Vergleichsergebnis oder jedes der Vergleichsergebnisse 48 kann im Datenspeicher abgespeichert werden und kann als Referenzergebnis für zukünftige Projekte zur Verfügung stehen. Insbesondere kann zu einem späteren Zeitpunkt das oder die Vergleichsergebnisse 48 mit den tatsächlichen Baukosten oder Immobilienwerten überprüft werden.

Jede der Datengruppen 25, 35 kann bei dieser Überprüfung angepasst und gegebenenfalls korrigiert werden, sodass die Datengruppen 25, 35 nach jedem Verfahrensdurchlauf erweitert werden und somit die Datenbasis mit der Anzahl der Verfahrensläufe zunehmend optimiert wird. Das Verfahren ermöglicht somit die Implementierung eines selbstlernenden Systems, welches mit zunehmender Anzahl an Projekten, also mit einer zunehmenden Anzahl an Verfahrensdurchläufen durch die das grössere Datenvolumen in den Datengruppen 25, 35 die Ergebnisse der Simulationsmodelle 28, 38, der Optimierungsmodelle 29, 39 oder der Regressionsanalysen 30, 40 sowie der Gruppenresultate 32, 42 auf jeder Verfahrensstufe präzisiert und damit zunehmend genauere Schätzungen, das heisst präzisere Vergleichsergebnisse 48 liefert.

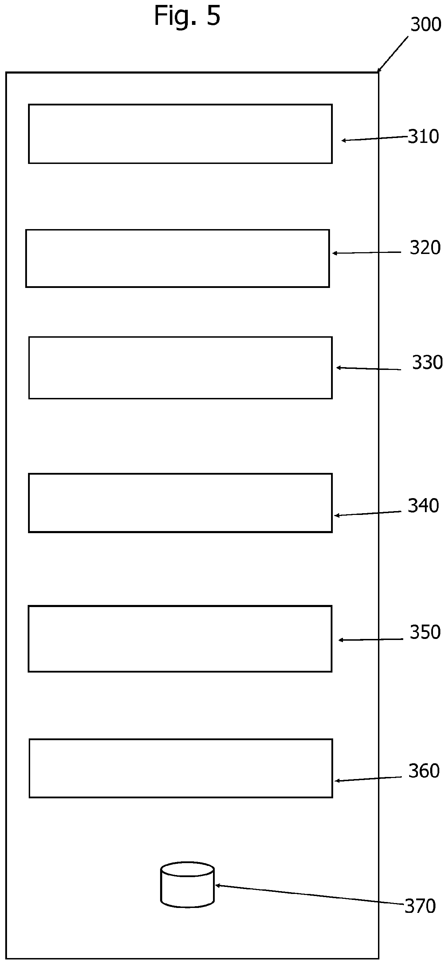

Fig. 5 zeigt ein Schema eines prädiktiven Modellsystems 300 zur Durchführung eines Verfahrens zur Modellierung 4 nach einem der vorhergehenden Ausführungsbeispiele. Das prädiktive Modellsystem 300 kann in die Prozessoreinheit 150 (Fig. 2, Fig. 4) integriert sein. Das prädiktive Modellsystem 300 enthält ein Eingabemodul 310, einen Datenspeicher 320, mindestens ein Simulationsmodell 330, eine Prozessoreinheit 340, ein Eingabe/Ausgabegerät 350, eine Regelungseinheit 360 sowie einen oder mehrere Speicher 370.

Das Eingabemodul 310 versorgt das prädiktive Modellsystem 300 mit Daten. Die Daten können beispielsweise abgerechnete Bauprojekte mit sämtlichen Parametern, welche in die Kostenberechnung eingeflossen sind, umfassen oder sie können Betriebsparameter oder Reglerwerte 24, 34, 44, 54, 64 umfassen (siehe Fig. 4). Die Daten können Daten enthalten, die aus systemexternen oder systeminternen Quellen stammen. Im Eingabemodul 310 können die Daten formatiert oder umgewandelt werden, sodass die Daten von den anderen Systemkomponenten verarbeitet oder gespeichert werden können.

Das prädiktive Modellsystem 300 kann auch einen Datenspeicher 320 enthalten. Die Daten, die mittels des Eingabemoduls 310 in das prädiktive Modellsystem eingespeist werden, können im Datenspeicher 320 abgelegt werden. Der Datenspeicher 320 kann auch relationale Datenbank umfassen, wobei die Daten in zugehörigen Datenbanktabellen strukturiert abgelegt sind. Jede der Datenbanktabellen kann Spalten umfassen, welche den Datentyp enthalten und Reihen, welche die Datenwerte enthalten. Der Datenspeicher 320 kann auch eine objektorientierte Datenbank umfassen, in welcher die Daten in einer logischen oder physischen Objektserie abgelegt sind. Jedem Objekt kann eine Serie von Werten zugewiesen werden. Die Daten können auch als XML-Dateien abgelegt sein. Sämtliche Daten enthalten eine Daten-ID anhand welcher sie ein-eindeutig identifizierbar sind, sodass sie jederzeit aus dem Datenspeicher 320 abgerufen werden können.

Das prädiktive Modellsystem 300 enthält zumindest ein Simulationsmodell 330. Das oder jedes der Simulationsmodelle 330 kann eine Modellierung eines Gebäudes derart vornehmen, dass eine Schätzung der Baukosten oder Immobilienwerte des Gebäudes erhalten werden kann. Das Simulationsmodell 330 kann jedes der in Fig. 4 beschriebenen Simulationsmodelle 28, 38, Optimierungsmodelle 29, 39, Regressionsanalysen 30, 40, Gruppenregressionsfunktionen 31, 41, Gruppenresultate 32, 42 sowie die Vergleichseinheit 47 umfassen. Mittels dem Vergleichsergebnis 48, welches durch die Vergleichseinheit 47 erhalten wird, kann eine oder mehrere Schätzungen der Baukosten oder Immobilienwerte des Gebäudes erhalten werden und hiermit optimale Baukosten oder Immobilienwerte gefunden werden. Die Simulationsmodelle 330 können Hardwaremodule oder Softwaremodule umfassen, die vorprogrammiert werden können oder vorkonfiguriert werden können.

Das prädiktive Modellsystem 300 enthält die Prozessoreinheit 340. Die Prozessoreinheit 340 ist geeignet, um ein Computerprogrammprodukt auszuführen und kann einen Mikroprozessor umfassen, der auf einem beliebigen Rechner physisch oder virtuell vorgesehen sein kann. Die Prozessoreinheit 340 kann Instruktionen und/oder Daten von einem ROM oder RAM und/oder anderen Komponenten des prädiktiven Modellsystems 300 erhalten. Mittels der Prozessoreinheit können die Daten zu Datengruppen 25, 35 gruppiert werden, wobei Programmprodukte eingesetzt werden können, welche die Daten mittels statistischer Verfahren auf Datenmuster untersuchen. Ein Datenmuster kann durch ein Modell beschrieben werden, welche den zum Datenmuster gehörigen Datensatz beschreibt. Mittels eines derartigen Modells können zukünftig generierte oder eingegebene Daten auf die Zugehörigkeit zum Datenmuster überprüft werden. Ein derartiges Modell kann eine oder mehrere Gleichungen umfassen, welche eine Korrelation der Daten des Datenmusters beschreiben.

Die Datengruppen 25, 35 oder die manuellen Reglerwerte 33, 43 werden in der Prozessoreinheit 340 mit den Simulationsmodellen 28, 38 derart verknüpft, dass die Daten in die Simulationsmodelle 28, 38 eingegeben werden und das entsprechende Simulationsmodell von der Prozessoreinheit 340 ausgeführt wird. Wenn das Ergebnis, welches nach Ausführung des Simulationsmodells erhalten wird, dem für die Datengruppen 25, 35 zu erwartenden Ergebnis entspricht, wird das zugehörige Optimierungsmodell 29, 39 ausgeführt. Wenn das aus dem Simulationsmodell 28, 38 erhaltene Ergebnis dem zu erwartenden Ergebnis nicht entspricht, kann von der Prozessoreinheit ein anderes Simulationsmodell ausgewählt werden oder das Simulationsmodell angepasst werden, bis die Ergebnisse dem zu erwartenden Ergebnis entspricht. Verschiedene Simulationsmodelle können im Datenspeicher 320 abgelegt sein oder im Speicher 370 gespeichert sein. Sollte im Datenspeicher 320 oder im Speicher 370 kein entsprechendes Simulationsmodell gespeichert sein, kann mittels eines Suchmoduls nach einem passenderen Simulationsmodell in einem Netzwerk, beispielsweise im Internet gesucht werden. Gespeicherte und/oder aus dem Netzwerk bezogene Simulationsmodelle können allen Datengruppen 25, 35 sowie allen manuellen Reglerwerten zur Verfügung gestellt werden. In der Prozessoreinheit können die Simulationsmodelle 28, 38 sowie die Optimierungsmodelle 29, 39 beliebig oft durchgeführt werden, solange bis das optimale Ergebnis vorliegt. Beispielsweise kann die Optimierung eine Minimierung der Gebäudekosten beinhalten. Gemäss diesem Beispiel werden die Gebäudekosten minimiert, indem von der Prozessoreinheit ein Simulationsmodell wiederholt ausgeführt wird, sodass eine Kostenschätzung für jede mögliche Parameterkombination der Datengruppen 25, 35 oder der Reglerwerte 33, 43 ermittelt wird und im Anschluss daran von der Prozessoreinheit 340 die Parameterkombination identifiziert wird, welche die minimalen Gebäudekosten aufweist. Mit der Parameterkombination, welche die optimalen Ergebnisse liefert, kann von der Prozessoreinheit ein Optimierungsmodell 29, 39 erstellt werden.

Mit den Ergebnissen des Optimierungsmodells 29, 39 kann von der Prozessoreinheit 340 eine Regressionsanalyse 30, 40 erstellt werden. Mittels der Regressionsanalyse 30, 40 sind eine oder mehr Gleichungen für die Ermittlung der optimalen Schätzung der Baukosten oder Immobilienwerte für jede der Datengruppen 25, 35 oder die manuellen Reglerwerte 33, 43 erhältlich. Wenn die Gleichungen, welche aus der Regressionsanalyse 30, 40 erhalten werden, auf die gewünschte Kombination der Datengruppen 25, 35 oder die manuellen Reglerwerte 33, 43 angewendet wird, wird ein Gruppenresultat 32, 42 erhalten. Das Gruppenresultat 32, 42 kann von der Prozessoreinheit 340 in eine Vergleichseinheit 47 übertragen werden, mittels welcher das Vergleichsergebnis 48 ermittelt wird.

Das prädiktive Modellsystem 300 enthält das Ein/Ausgabegerät 350, welches eine Kommunikationsschnittstelle mit dem Benutzer umfasst. Der Benutzer kann eine Person oder ein anderes System umfassen. Die Kommunikationsschnittstelle kann eine Maus, eine Tastatur, einen Touchscreen, ein Mikrophon oder ein beliebiges anderes interaktives Gerät umfassen, welches einem Benutzer die Kommunikation mit dem prädiktiven Modellsystem 300 ermöglicht. Die Kommunikationsschnittstelle kann als Ausgabegerät auch ein Visualisierungsmittel, beispielsweise einen Bildschirm umfassen, um beispielsweise ein Vergleichsergebnis 48 anzuzeigen.

Das prädiktive Modellsystem 300 enthält die Regelungseinheit 360. Die Regelungseinheit 360 kann aufgrund von Rückmeldungen aus dem System beispielsweise das Simulationsmodell 330 überarbeiten oder erneuern oder kann in Abhängigkeit von der Rückmeldung andere Simulationsmodelle vorschlagen.

Das prädiktive Modellsystem 300 enthält den Speicher 370, der beispielsweise als maschinenlesbares Speichermedium ausgebildet sein kann. Der Speicher 370 kann beispielsweise zur Speicherung der Daten des Datenspeichers 320 verwendet werden. Der Speicher 370 kann auch die Instruktionsfolgen des oder der Simulationsmodelle 330 speichern, mittels welchen die Vergleichsergebnisse 48 erhältlich sind, wenn sie ausgeführt werden.

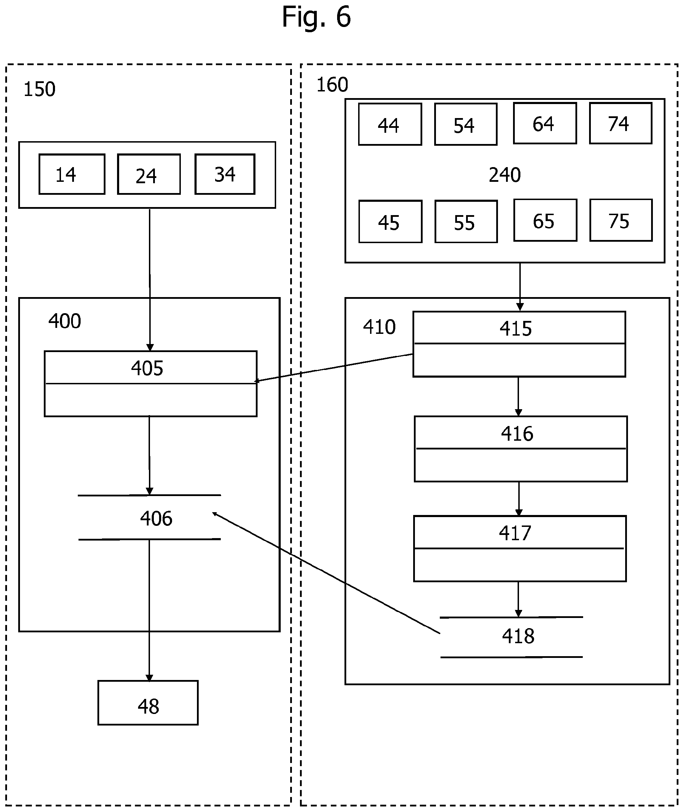

Fig. 6 zeigt ein Verfahren 10 gemäss einem weiteren Ausführungsbeispiel zur Durchführung einer Analyse 4 mittels eines prädiktiven Modells. Das Schätzmodul 150 umfasst eine Prozessoreinheit 15, welche die Analyse 4 mittels des prädiktiven Modells erstellt, was in Fig. 2 gezeigt ist. Wahlweise kann durch das Schätzmodul 150 ein Bericht 5 über die Baukosten oder Immobilienwerte für die gewählte Gebäudekonfiguration erstellt werden. Das Verfahren kann somit mittels der Prozessoreinheit 15 durchgeführt werden kann, die Bestandteil einer Datenverarbeitungsvorrichtung oder eines Datenverarbeitungssystems sein kann. Das Verfahren 10 kann mittels einer Mehrzahl von Prozessoreinheiten 15 durchgeführt werden, wobei die Prozessoreinheiten 15 in einer oder mehreren Datenverarbeitungsvorrichtungen oder Datenverarbeitungssystemen enthalten sein können.

Über ein Benutzergerät 110 kann der Benutzer mit der Datenverarbeitungsvorrichtung oder dem Datenverarbeitungssystem kommunizieren. Die Datenverarbeitungsvorrichtung oder das Datenverarbeitungssystem kann lokal auf einem PC oder einem mobilen Endgerät des Benutzers enthalten sein oder sich auf einem Server befinden, welcher über ein Netzwerk, beispielsweise das Internet mit dem PC oder mobilen Endgerät des Benutzers verbindbar ist.

Das Ausgabegerät 120 umfasst eine Anzeigeeinheit, welche eine Abbildung des oder der Regler 140 gemäss den vorherigen Ausführungsbeispielen enthält. Jeder dieser Regler 140 weist einen ihm zugeordneten Reglerwert 14, 24, 34 auf. In der vorliegenden Darstellung sind exemplarisch drei Reglerwerte 14, 24, 34 dargestellt, diese Zahl ist aber nur als Beispiel anzusehen. Das Verfahren kann für eine beliebige Anzahl an Reglerwerten durchgeführt werden. Der Benutzer kann jeden der Regler 140 auswählen und kann jeden zugehörigen Reglerwert 14, 24, 34 auf dem Ausgabegerät sehen, welches eine entsprechende Anzeigeeinheit umfasst. Der auf der Anzeigeeinheit dargestellte Reglerwert 14, 24, 34 zeigt eine Voreinstellung, welche mittels des prädiktiven Modells ermittelt worden ist. Die Voreinstellung kann graphisch auf dem Ausgabegerät 120 visualisiert werden, beispielsweise kann die dem Reglerwert entsprechende Gebäudeausstattung visuell auf der Anzeigeeinheit dargestellt sein.

Die Prozessoreinheit 15 kann auf einen oder mehrere Datenspeicher zugreifen, um Inferenz 400 der Eingabeparameter mithilfe eines Datenaufbereitungsprozesses 405 und einer Modellfunktion 406, welche aus dem Modellmodul 160 bezogen werden, auszuführen und somit ein Resultat der Analyse 4 ermitteln. Bei dem Resultat kann es sich um ein Vergleichsergebnis 48 handeln, wie in Zusammenhang mit dem Ausführungsbeispiel gemäss Fig. 4 beschrieben worden ist.

Die Eingabeparameter umfassen sämtliche eingestellte Reglerwerte 14, 24, 34 und Daten aus der Dateneingabe 2.

Ein Modell im Modellmodul 160 beschreibt eine Modellfunktion 418, die Eingabeparameter auf eine Zielvariable abbildet und somit die Zielvariable schätzt. Sie kann beispielsweise eine Regressionsfunktion beschreiben, die unter Verwendung einer oder mehrerer Prozessoreinheiten und einem Datenspeicher 240 ermittelt wird und als Zielvariable die totalen Baukosten definiert hat. Dieser Prozess wird im allgemeinen Fall als statistische Analyse 410 bezeichnet und im Falle der Erzeugung einer Regressionsfunktion spezifisch als Regressionsanalyse. Im Folgenden wird ein Ausführungsbeispiel für den Fall der Regressionsanalyse beschrieben.

Im Datenspeicher 240 sind sämtliche Daten von Gebäuden inklusive Baukosten enthalten, welche mit den Reglerwerten 14, 24, 34 verknüpfbar sind oder verknüpft sind. Diese Daten sind nach gleichem Schema wie bei der Inferenz 400 strukturiert und dienen somit als Vergleichsprobe, aus welcher die Regressionsfunktion geschätzt wird. Es existiert also für jede Probe a ein entsprechender Reglerwert 44, 54, 64 und Baukosten 74 respektive für Probe b ein entsprechender Reglerwert 45, 55, 65 und Baukosten 75.

Die Regressionsanalyse setzt sich zusammen aus einer Datenaufbereitung 415, einer Modell-Anpassung 416 und einer Modell-Validierung 417.

Die Datenaufbereitung 415 kann ein Element aus der Gruppe der Transformationen der Eingabe-Parameter, Merkmalsuntergruppenauswahl (Feature Subset Selection), Merkmalsaggregation (Feature Aggregation), Datenplausibilisierungen oder Verfahren zum Umgang mit fehlenden Daten enthalten.

Die Modell-Anpassung 416 definiert Verfahren, um die Parameter des Modells so anzupassen, dass eine Kostenfunktion optimiert wird, welche einen Mittelwert der geschätzten Baukosten aus dem Datenspeicher 240 unter Kenntnis aller Parameter ausser die Baukosten selber mit möglichst geringem Fehler abbildet. Dabei kann die Kostenfunktion respektive das Modell bestimmten Bedingungen unterworfen sein. Es kann Monotonie der Modellfunktion bei Veränderung eines Reglers respektive Eingabeparameters gefordert sein, wie z.B. folgende Bedingung: Wird der Regler für Grundstücks- und Bauplatzverhältnisse um einen Schritt erhöht, sollen die totalen Baukosten gleich bleiben oder ebenfalls erhöht werden. Die Modell-Anpassung 416 kann Algorithmen wie Lineare Regression, Gradient Boosting, künstliche neuronale Netze oder Ensemble Methoden enthalten. Wird beispielsweise lineare Regression angewendet, erfordert die vorherig genannte Monotonie-Bedingung, dass der Koeffizient für die Grundstücks- und Bauplatzverhältnisse null oder positiv ist.

Während der Modell-Validierung 417 wird die Generalisierung des Modells überprüft. Im Beispiel wird überprüft, wie gut das Modell Baukosten von unbekannten Daten vorhersagen kann. Ein Modell ist dann gut, wenn es allgemein gültige Datenmuster erkennt, anstatt nur die exakten Datenpunkte aus den dem Datenspeicher wiederzugeben. Dabei können Testverfahren wie Varianten des Kreuzvalidierungsverfahrens angewendet werden, um eine möglichst exakte Abschätzung des echten Test-Fehlers zu erhalten.

Aus dem Testverfahren kann schliesslich - sofern der Test-Fehler hinreichend klein ist - eine Modellfunktion respektive Regressionsfunktion abgeleitet werden, die die Eingabeparameter auf geschätzte Baukosten abbildet.

Für den Fachmann ist offensichtlich, dass viele weitere Modifikationen zusätzlich zu den beschriebenen Ausführungsbeispielen möglich sind, ohne vom erfinderischen Konzept abzuweichen. Der Gegenstand der Erfindung wird somit durch die vorangehende Beschreibung nicht eingeschränkt und ist durch den Schutzbereich bestimmt, der durch die Ansprüche festgelegt ist. Für die Interpretation der Ansprüche oder der Beschreibung ist die breitest mögliche Lesart der Ansprüche massgeblich. Insbesondere sollen die Begriffe "enthalten" oder "beinhalten" derart interpretiert werden, dass sie sich auf Elemente, Komponenten oder Schritte in einer nicht-ausschliesslichen Bedeutung beziehen, wodurch angedeutet werden soll, dass die Elemente, Komponenten oder Schritte vorhanden sein können oder genutzt werden können, dass sie mit anderen Elementen, Komponenten oder Schritten kombiniert werden können, die nicht explizit erwähnt sind. Wenn die Ansprüche sich auf ein Element oder eine Komponente aus einer Gruppe beziehen, die aus A, B, C... N Elementen oder Komponenten bestehen kann, soll diese Formulierung derart interpretiert werden, dass nur ein einziges Element dieser Gruppe erforderlich ist, und nicht eine Kombination von A und N, B und N oder irgendeiner anderen Kombination von zwei oder mehr Elementen oder Komponenten dieser Gruppe.

## Patentansprüche

1. Verfahren (10) zur interaktiven Schätzung von Baukosten oder Immobilienwerten für ein Gebäude, enthaltend einen Schritt der Eingabe einer Eingabegrösse des Gebäudes in ein System (100), wobei die Eingabe der Eingabegrösse eine Dateneingabe (2) umfasst, wobei die Dateneingabe (2) einer gewählten Gebäudekonfiguration entspricht, wobei gewählte Gebäudekonfiguration auf einem Benutzergerät (110) angezeigt wird, wobei das System einen Regler (140) enthält, wobei durch Betätigung des Reglers (140) eine Veränderung der gewählten Gebäudekonfiguration auf dem Benutzergerät (110) erfolgt, sodass eine Datenanpassung (3) erfolgt, wobei die Betätigung des Reglers (140) fortgesetzt wird, bis die gewählte Gebäudekonfiguration einer gewünschten Gebäudekonfiguration entspricht, wobei für die gewünschte Gebäudekonfiguration eine Analyse (4) durchgeführt wird, um die Baukosten oder Immobilienwerte für die gewünschte Gebäudekonfiguration zu schätzen, wobei die Analyse (4) für die gewählte Gebäudekonfiguration mittels eines prädiktiven Modells durchgeführt wird.

2. Verfahren nach Anspruch 1, wobei das System (100) ein Schätzmodul (150) enthält mittels welchem die Analyse (4) erstellt wird, wobei das Schätzmodul (150) mittels eines Modellmoduls (130) unter Verwendung von in einem Datenspeichermodul (130) oder in einem Referenzobjektspeichermodul (135) gespeicherten Daten die Baukosten oder Immobilienwerte für die gewählte Gebäudekonfiguration ermittelt.

3. Verfahren nach einem der vorhergehenden Ansprüche, wobei mittels des prädiktiven Modells Voreinstellungen basierend auf vorhanden Daten ermittelt werden, wobei mittels des prädiktiven Modells eine Modellierung der gewählten Gebäudekonfiguration zur Bestimmung der Baukosten für die gewählte Gebäudekonfiguration erfolgt, wobei die Voreinstellungen für die gewählte Gebäudekonfiguration dem Benutzer angezeigt werden können, wobei der Regler (140) vom Benutzer zur Veränderung der gewählten Gebäudekonfiguration betätigt werden kann, sodass der Benutzer die gewählte Gebäudekonfiguration anpassen kann, indem er die Voreinstellungen durch die Betätigung des Reglers (140) verändert.

4. Verfahren nach Anspruch 3, wobei die geänderten Voreinstellungen mittels des prädiktiven Modells zur Durchführung einer weiteren Analyse verwendet werden, wobei die Datenanpassung (3) in das prädiktive Modell übernommen wird, wobei die weitere Analyse (4) der gewählten Gebäudekonfiguration zur Bestimmung der Baukosten für die gewählte Gebäudekonfiguration erfolgt, nachdem der Benutzer die Dateneingabe (2) oder Datenanpassung (3) abgeschlossen hat.

5. Verfahren nach einem der vorhergehenden Ansprüche 2 bis 4, wobei das Schätzmodul (150) eine Prozessoreinheit (15) umfasst, welche die Analyse (4) mittels des prädiktiven Modells erstellt, wobei durch das Schätzmodul (150) ein Bericht (5) über die Baukosten oder Immobilienwerte für die gewählte Gebäudekonfiguration erstellt werden kann.

6. Verfahren nach Anspruch 5, wobei die Prozessoreinheit (15) auf einen oder mehrere Datenspeicher zugreifen kann, um ein Simulationsmodell (28, 38) ein Optimierungsmodell (29, 39) oder eine Regressionsanalyse (30, 40) auszuführen.

7. Verfahren nach Anspruch 6, wobei aus der Regressionsanalyse (30, 40) eine Regressionsfunktion (31, 41) ermittelt wird, welche gegebenenfalls unter der Berücksichtigung eines manuellen Reglerwertes (33, 43) ein Resultat der Analyse (4) ermittelbar ist.

8. Verfahren nach einem der vorhergehenden Ansprüche, wobei eine Mehrzahl von Reglern (140) bereitgestellt wird, wobei mittels jedes Reglers mindestens ein Parameter der gewählten Gebäudekonfiguration einstellbar ist, wobei mittels des Reglers (140) zumindest ein Parameter eingestellt werden kann, der die Komplexität oder die Qualität des Gebäudes beschreibt.

9. Verfahren nach einem der Ansprüche 5 bis 8, wobei die Daten von der Prozessoreinheit (15) in eine Mehrzahl von Datengruppen (25, 35) gruppiert werden.

10. Verfahren nach einem der vorhergehenden Ansprüche, wobei der Zugang zum System durch ein Authentifizierungsverfahren (1) erfolgt.

11. Verfahren nach einem der vorhergehenden Ansprüche, wobei der Regler (140) und die gewählte Gebäudekonfiguration auf dem Benutzergerät (110) visuell oder textlich derart dargestellt sind und korrelieren, dass die durch die entsprechend der Stellung des Reglers (140) gerade gewählte Gebäudekonfiguration auf dem Benutzergerät (110) angezeigt wird.

12. Verfahren nach einem der vorhergehenden Ansprüche, wobei das System (100) ein Computerprogrammprodukt enthält, wobei das Computerprogrammprodukt ein benutzerseitiges Teilsystem (11) und ein betreiberseitiges Teilsystem (12) umfasst, welche durch ein Netzwerk (13) verbunden sind, wobei das betreiberseitige Teilsystem (12) ein Schätzmodul (150) zur Ermittlung von Baukosten oder Immobilienwerte, ein Datenspeichermodul (130) oder ein Referenzobjektspeichermodul (135) sowie ein Modellmodul (160) enthält, wobei das benutzerseitige Teilsystem (11) das Benutzergerät (110) zur Dateneingabe (2) enthält, wobei das Benutzergerät (110) den Regler (140) zur Datenanpassung (3) enthält, wobei die Datenanpassung (3) als eine bauliche Modifikation des Gebäudes auf dem Benutzergerät (110) angezeigt wird, sodass anhand der baulichen Modifikation des Gebäudes auf dem Benutzergerät (110) unmittelbar erkennbar ist, wie sich die Datenanpassung (3) auf die gewählte Gebäudekonfiguration auswirkt.

13. System zur Schätzung von Baukosten oder Immobilienwerte für ein Gebäude, wobei das System (100) ein Computerprogrammprodukt enthält, wobei das Computerprogrammprodukt ein benutzerseitiges Teilsystem (11) und ein betreiberseitiges Teilsystem (12) umfasst, welche durch ein Netzwerk (13) verbindbar sind, wobei das betreiberseitige Teilsystem (12) ein Schätzmodul (150) zur Ermittlung von Baukosten oder Immobilienwerte, ein Datenspeichermodul (130) oder einem Referenzobjektspeichermodul (135) sowie ein Modellmodul (160) enthält, wobei das benutzerseitige Teilsystem (11) ein Benutzergerät (110) zur Dateneingabe (2) und zur Anzeige einer durch die Dateneingabe (2) gewählten Gebäudekonfiguration enthält, wobei das Benutzergerät (110) einen Regler (140) enthält, wobei der Regler (140) zur Veränderung der gewählten Gebäudekonfiguration auf dem Benutzergerät (110) justierbar ist, bis die gewählte Gebäudekonfiguration einer gewünschten Gebäudekonfiguration entspricht, wobei durch das Schätzmodul (150) eine Analyse (4) für die gewünschte Gebäudekonfiguration erstellbar ist, um die Baukosten oder Immobilienwerte für die gewünschte Gebäudekonfiguration zu schätzen, wobei die Analyse für die gewählte Gebäudekonfiguration mittels eines prädiktiven Modellsystems, welches ein prädiktives Modell enthält, durchführbar ist.

14. System nach Anspruch 13, wobei mittels des prädiktiven Modells Voreinstellungen basierend auf im Datenspeichermodul (130) oder dem Referenzobjektspeichermodul (135) vorhandenen Daten ermittelbar sind, wobei mittels des prädiktiven Modells eine Modellierung der gewählten Gebäudekonfiguration zur Bestimmung der Baukosten für die gewählte Gebäudekonfiguration erfolgt, wobei die Voreinstellungen für die gewählte Gebäudekonfiguration dem Benutzer angezeigt werden können, wobei der Regler vom Benutzer zur Veränderung der gewählten Gebäudekonfiguration betätigt werden kann, sodass der Benutzer die gewählte Gebäudekonfiguration anpassen kann, indem er die Voreinstellungen durch die Betätigung des Reglers verändert, wobei die geänderten Voreinstellungen mittels des prädiktiven Modells zur Durchführung einer weiteren Analyse verwendbar sind, wobei die Datenanpassung (3) in das prädiktive Modell übernehmbar ist, wobei die weitere Analyse (4) der gewählten Gebäudekonfiguration zur Bestimmung der Baukosten für die gewählte Gebäudekonfiguration erfolgt, nachdem der Benutzer die Dateneingabe (2) oder Datenanpassung (3) abgeschlossen hat.

15. System nach Anspruch 14, wobei das prädiktive Modellsystem (300) ein Eingabemodul (310), einen Datenspeicher (320), mindestens ein Simulationsmodell (330), eine Prozessoreinheit (340), ein Eingabe-/Ausgabegerät (350), eine Regelungseinheit (360) sowie einen oder mehrere Speicher (370) enthält.
